(19) **Europäisches Patentamt**
**European Patent Office**
**Office européen des brevets**

(11) **EP 4 704 384 A1**

(12) **EUROPEAN PATENT APPLICATION**

(43) Date of publication:
04.03.2026 Bulletin 2026/10

(51) International Patent Classification (IPC):
*H04L 9/40* (2022.01)       *G06F 21/55* (2013.01)
*G06F 40/30* (2020.01)

(21) Application number: 25196964.8

(22) Date of filing: 20.08.2025

(52) Cooperative Patent Classification (CPC):
**G06F 21/552; G06F 40/30; H04L 63/1425**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 28.08.2024 US 202463688201 P
19.11.2024 US 202418952205

(71) Applicant: **Microsoft Technology Licensing, LLC
Redmond, WA 98052 (US)**

(72) Inventors:
• **FREITAS, Scott Alexander
Redmond, Washington 98052 (US)**
• **GHARIB, Amirhossein
Redmond, Washington 98052 (US)**

(74) Representative: **CMS Cameron McKenna Nabarro
Olswang LLP
Cannon Place
78 Cannon Street
London EC4N 6AF (GB)**

(54) **ADAPTIVE INCIDENT PRIORITIZATION ENGINE IN A SECURITY MANAGEMENT SYSTEM**

(57)     Methods, systems, and computer storage media for providing security incident prioritization management using an adaptive incident prioritization engine of a security management system are described. The adaptive incident prioritization engine provides security incident prioritization based on an adaptive incident prioritization (AIP) framework built using a ranking algorithm. In particular, the adaptive incident prioritization framework employs a Best Matching 25 (BM25) algorithm and strategically and programmatically adapts the algorithm (e.g., an adaptive incident prioritization model) to rank security incidents based on a local security incident relevance metric (an adaptation of Term Frequency - TF - in BM25) and a global security incident rarity metric (an adaptation of Inverse Document Frequency - IDF - in BM25) associated with security incidents. A prioritization score for a security incident is calculated based on aggregating weighted frequencies of security incident ranking components (e.g., security incident metadata) within a security incident to determine an overall significance of the security incident.

FIG. 4

## Description

## BACKGROUND

Users rely on computing environments with applications and services to accomplish computing tasks. Distributed computing systems host and support different types of applications and services in managed computing environments. In particular, computing environments can implement a security management system that provides security configuration management functionality and supports threat protection in the computing environments. For example, cloud security posture management (CSPM) can include identifying and remediating risk by automating visibility, executing uninterrupted monitoring and threat detection, and providing remediation workflows to mitigate security incidents in diverse cloud computing environments and infrastructure. In addition, security management systems can provide incident prioritization to ensure that a Security Operations Center (SoC) analyst focuses on the most critical and high-risk incidents.

## SUMMARY

Various aspects of the technology described herein are generally directed to systems, methods, and computer storage media for, among other things, providing security incident prioritization management using an adaptive incident prioritization engine of a security management system. Security incident prioritization management generally refers to assessing and ranking security incidents to ensure that resources are allocated effectively for response. The adaptive incident prioritization engine provides security incident prioritization based on an adaptive incident prioritization (AIP) framework built using a ranking algorithm. In particular, the adaptive incident prioritization framework employs a Best Matching 25 (BM25) algorithm and strategically and programmatically adapts the algorithm (e.g., an adaptive incident prioritization model) to rank security incidents based on a local security incident relevance metric (an adaptation of Term Frequency in BM25) and a global security incident rarity metric (an adaptation of Inverse Document Frequency in BM25) associated with security incidents. A prioritization score for a security incident is calculated based on aggregating weighted frequencies of security incident ranking components (e.g., security incident metadata) within a security incident to determine an overall significance of the security incident. The prioritization score - based on the local security incident relevance metric and the global security incident rarity metric - reflects diversity, rarity, and size of a security incident, providing a comprehensive measure of the security incident's overall impact in a computing environment. High scores indicate security incidents with significant and unique ranking components ensuring the most critical security incidents are prioritized.

Operationally, the adaptive incident prioritization engine can be implemented as a dual job pipeline configuration which includes (1) a training phase that analyzes historical customer incident telemetry data to calculate the global security incident rarity metric (i.e., Inverse Document Frequencies - IDF); and (2) an inference phase that processes new incoming incidents - having local security incident relevance metrics (i.e., Term Frequency - TF) and ranks them using the adaptive incident prioritization model associated with the BM25 algorithm and the global security incident rarity metric calculated in the training phase. In combination, the training phase and the inference phase balance the need for historical analysis and rapid real-time processing, maintaining high model performance and reliability.

Conventional security management systems are not configured with a comprehensive computing logic and infrastructure to effectively provide security incident prioritization management. Security management systems often lack incident ranking capability, causing difficulties for analysts in prioritizing investigations, especially in large Security Operations Centers (SOCs) that handle thousands of incidents daily. Sophisticated algorithms are central for effectively assessing and prioritizing incidents by analyzing diverse data points like threat intelligence and system vulnerabilities. For example, an algorithm might detect a high-risk ransomware attack amidst normal network traffic, requiring advanced modeling to differentiate genuine threats from routine anomalies. Developing and implementing these algorithms is complex and resource-intensive, demanding significant expertise, continuous updates, and substantial investment in technology, making it a challenging task for many organizations.

A technical solution - to the limitations of conventional security management systems - can include the challenge of adapting a ranking algorithm to effectively provide security incident prioritization and developing an implementation architecture that employs an adaptive prioritization engine to provide a training phase and an inference phase in security incident prioritization management. As such, a security management system can be improved based on an adaptive security incident engine that analyzes security incident components to evaluate the severity and impact of each incident. It would then rank these security incidents based on their local security incident relevance metrics (an adaptation of Term Frequency in BM25) and global security incident rarity metrics (an adaptation of Inverse Document Frequency in BM25) calculated using an adaptive incident prioritization model ensuring that the most critical issues are addressed first. The adaptive incident prioritization model can also continuously adapt and improve its prioritization models by learning from new information and changing conditions.

In operation, in a first embodiment, a security incident associated with a computing environment is accessed. A plurality of security incident components of the security incident are accessed. Local relevance metrics for the plurality of security incident components are calculated, a local relevance metric is an adapted term frequency that quantifies a frequency of a security incident component of the plurality of security incident components. Global rarity metrics for the plurality of security incident components are accessed, a global rarity metric is an adapted inverse document frequency that quantifies a rarity of a security incident component of the plurality of security incident components. The security incident is scored based on the local relevance metrics and the global rarity metrics. The security incident is ranked relative to a plurality of security incidents in the computing environment.

In a second embodiment, historical security data associated with a computing environment is accessed. A plurality of security incident components associated with a plurality of security incidents are identified in the historical security data. Global rarity metrics for the plurality of security incident components are calculated. An adaptive incident prioritization model is trained based on the global rarity metrics of the plurality of security incident components. The adaptive incident prioritization model is deployed.

In a third embodiment, a security incident identifier associated with a security incident, a security incident prioritization score, and an adaptive incident prioritization explanation data that provides a rationale associated with a plurality security incident components for the security incident prioritization score are accessed. Display of the security incident identifier relative to a plurality of security incident identifiers on a security incident prioritization interface based on the security incident prioritization score is caused. Display of the adaptive incident prioritization explanation data associated with the security incident is caused.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

**BRIEF DESCRIPTION OF THE DRAWINGS**

The technology described herein is described in detail below with reference to the attached drawing figures, wherein:

FIGS. 1A and 1B are block diagrams of an exemplary security management system including an adaptive incident prioritization engine, in accordance with aspects of the technology described herein;
FIGS. 1C - 1D are graphical user interfaces associated with an exemplary security management system including an adaptive incident prioritization engine, in accordance with aspects of the technology described herein;
FIGS. 2A and 2B are block diagrams of an exemplary security management system including an adaptive incident prioritization engine, in accordance with aspects of the technology described herein;
FIG. 3 provides a first exemplary method of providing contextual attack disruption using an adaptive incident prioritization engine, in accordance with aspects of the technology described herein;
FIG. 4 provides a second exemplary method of providing contextual attack disruption using an adaptive incident prioritization engine, in accordance with aspects of the technology described herein;
FIG. 5 provides a third exemplary method of providing contextual attack disruption using an adaptive incident prioritization engine, in accordance with aspects of the technology described herein;
FIG. 6 provides a block diagram of an exemplary security management system suitable for use in implementing aspects of the technology described herein;
FIG. 7 provides a block diagram of an exemplary distributed computing environment suitable for use in implementing aspects of the technology described herein; and
FIG. 8 is a block diagram of an exemplary computing environment suitable for use in implementing aspects of the technology described herein.

**DETAILED DESCRIPTION**

**OVERVIEW**

A security management system supports management of security aspects of data, resources, and workloads in computing environments. The security management system can help enable protection against threats, help reduce risk across different types of computing environments, and help strengthen a security posture of computing environments (i.e., security status and remediation-action recommendations for computing resources including networks and devices). For example, the security management system can provide real-time security alerts, centralize insights for different resources, and provide for preventative protection, post-breach detection, and automated investigation, and response. The security management system can further support providing incident prioritization to ensure that a Security Operations Center (SoC) analyst focuses on the most critical and high-risk incidents.

Conventional security management systems not configured with a comprehensive computing logic and infrastructure to effectively provide security incident prioritization management. These security management systems lack incident ranking capability, which leaves analysts unsure about how to prioritize their investigation efforts. This is a significant challenge for large Security Operations Centers (SOCs) that handle thousands of incidents each day. Without adequate ranking functionality, a security system cannot quickly identify and escalate high-importance or severe incidents to ensure that they receive immediate attention. Conversely prioritizing time-critical incidents, a security management system can help mitigate damage and addresses threats to a computing environment before they escalate further.

Cyberattacks are malicious activities carried out by individuals or groups with the intent to compromise the security of computing environments. These attacks can take various forms, such as malware, phishing, denial-of-service, or exploiting vulnerabilities. The impact of cyberattacks on security is profound, leading to unauthorized access, data breaches, service disruptions, and financial losses. Effective cybersecurity measures are essential to detect, prevent, and mitigate the risks posed by cyber threats. Providing security incident prioritization offers several key benefits. It enables more efficient allocation of resources by directing attention to the most critical incidents first, ensuring that significant threats are addressed promptly. This approach reduces response times, allowing teams to react swiftly to high-risk issues and thereby minimizing potential damage and speeding up recovery.

By distinguishing between high and low-priority threats, prioritization enhances threat management and improves the organization's overall security posture. It also supports better decision-making by offering clear guidance on which incidents require immediate attention. Ultimately, focusing on high-priority incidents helps to minimize impacts such as data breaches, service disruptions, and financial losses, thereby safeguarding the organization's assets and reputation.

Sophisticated algorithms are essential for accurately assessing and prioritizing security incidents because they must analyze a wide range of data points-such as threat intelligence, system vulnerabilities, and potential impacts-to determine the severity and urgency of each incident. For instance, a security management system might use an algorithm to analyze patterns in network traffic and identify anomalies that could indicate a cyber-attack. The algorithm must then evaluate the potential impact of these anomalies, considering factors like the sensitivity of the data involved, the type of attack, and the system's overall vulnerability. If the system detects unusual activity consistent with a high-risk ransomware attack, the algorithm must prioritize this incident over less severe issues, such as a low-level phishing attempt. The challenge lies in accurately differentiating between normal fluctuations and genuine threats, which requires advanced modeling and continuous adaptation to new threat vectors. A normal fluctuation might be a temporary increase in traffic due to a legitimate marketing campaign, while a genuine threat could be a sudden spike in traffic from an unfamiliar source indicating a potential Distributed Denial of Service (DDoS) attack. This complexity and the need for high accuracy make the implementation resource-intensive and technically demanding. Developing these algorithms involves complex processes like behavioral analysis, which require significant expertise and continuous updates to adapt to evolving threats. Implementing such systems effectively demands substantial investment in technology and skilled personnel, making it challenging for many organizations to achieve. As such, a comprehensive security management system - with an alternative basis for performing security incident prioritization management - can improve computing operations and interfaces in security management systems.

## DESCRIPTION OF TECHNICAL SOLUTION

At a high level, an adaptive incident prioritization engine operates based on an Adaptive Incident Prioritization (AIP) framework based on a modified BM25 ranking algorithm. The adaptive incident prioritization engine includes an adaptive incident prioritization model that incorporates security incident ranking components including security incident metadata (e.g., severity, hero scenario, disruption information, alert diversity, alert rarity, signal-to-noise ratio, and an attack stage) in generating security incident prioritization scores for security incidents. The adaptive incident prioritization model supports generating a prioritization score based on a local security incident relevance metric (an adaptation of Term Frequency in BM25) and a global security incident rarity metric (an adaptation of Inverse Document Frequency in BM25) that reflects diversity, rarity, and size of a security incident, providing a comprehensive measure of the security incident's overall impact in a computing environment. Additionally, the security incident prioritization score includes a natural language explanation mechanism, providing transparency and insight into how each incident attribute contributes to the overall security incident ranking.

The following terms provide a framework to understand the technical solution behind an adaptive incident prioritization engine. This adaptive incident prioritization engine leverages historical security data and various metrics to assess and rank incidents based on their significance and potential impact.

A security incident can refer to an event that compromises or threatens the integrity, confidentiality, or availability of a computing environment. This includes unauthorized access, data breaches, misconfigurations, or any malicious activity that disrupts normal operations or poses a risk to the security of the cloud infrastructure and services. For example, a security incident in a cloud computing environment could occur when an attacker exploits a misconfigured security group in a computing environment. For instance, if a computing component is accidentally set to public access due to improper configuration, it could allow unauthorized users to view or download sensitive data stored in the computing component. This breach exposes confidential information and can lead to data leakage, potentially impacting the organization's data privacy and compliance status.

A security incident identifier is a unique alphanumeric code or label assigned to a specific security incident to facilitate tracking, management, and reference throughout its lifecycle. This security incident identifier ensures that each incident can be distinctly and consistently recognized in reports, communications, and analysis.

Historical security data refers to the recorded information about past security events and security incidents. The historical security data can specifically include past security events and security incidents associated with a computing environment, system, or network. A security event can refer to any observable occurrence within computing environment, system, or network that may affect its security. Examples include login attempts, file access, or system alerts. Security events are typically logged for analysis but do not necessarily indicate a threat on their own.

A security incident can refer to an event or series of events that indicates a potential or actual breach of security policies or compromises the confidentiality, integrity, or availability of data or systems. Incidents require investigation and response as they represent actual or potential harm, such as a data breach, malware infection, or unauthorized access. In this way, historical security data includes historical access logs, configuration changes, incident reports, and vulnerability assessments. Historical security data can be used to identify patterns, detect anomalies, and assess trends over time. By analyzing this historical data and under historical context, the security management system 110 can improve its security incident prioritization capabilities and enhance its response strategies.

A security incident component refers to various aspects or characteristics of a security incident to facilitate its assessment and prioritization. A security incident component can include security incident metadata that encompasses critical information such as the date and time of the incident, affected systems, IP addresses involved, and the nature of the threat, offering a comprehensive context for understanding the security incident. It can include the alerts generated by security systems, which signal the occurrence of potential security threats, providing initial indicators of malicious activities or breaches. It can further include incident grading that includes the incident's severity based on its potential impact, scope, and urgency, helping to categorize the incident into levels of criticality. Together, these aspects of a security incident support prioritization of security incidents effectively, ensuring that the most critical issues are addressed promptly and appropriately to minimize potential damage and operational disruption.

A local relevance metric refers to a metric that indicates the significance of a term (i.e., a security incident component) within a specific document (i.e., a security incident). It typically measures how frequently a term appears relative to the total number of terms in that document. Higher local relevance indicates that the term is more central or pertinent to the content of the document. A global rarity metric evaluates how infrequent or rare a term is across the entire corpus of documents. It measures the term's distribution, with rarer terms considered more significant due to their limited occurrence. A higher global rarity suggests that a term is less common and thus potentially more meaningful when it appears.

The adaptive incident prioritization model supporting ranks security incidents based on their local relevance metrics and global rarity metrics. The adaptive incident model is trained on historical security data and global rarity metrics and deployed to utilize local relevance metrics of security incidents to generate security incident prioritization scores.

Security incident prioritization explanation data provides detailed information about the criteria and factors used to score and rank security incidents. This security incident prioritization explanation data provides a rationale associated with a plurality security incident components for the security incident prioritization score. The security incident prioritization explanation data is based on security incident components and corresponding scores that are aggregated to generate the prioritization score.

A security incident prioritization interface can refer to a user-facing platform or tool that allows security teams to manage security incidents that are score and ranked as described herein. This interface typically displays information such as security incident prioritizations core, severity, impact, and security incident prioritization explanation data, enabling users to make informed decisions about which incidents to address first and allocate resources accordingly. It often includes features for sorting, filtering, and visualizing incidents to streamline the prioritization process.

The adaptive incident prioritization model includes a modular design enabled via the AIP framework, such that security incident prioritization scoring can support integration of additional telemetry sources and ranking features that enhance a base scoring mechanism. The extensibility means that new categorical features can be incorporated directly into the scoring process (e.g., a high priority asset tag) - ensuring the adaptive incident prioritization model evolves with emerging threats and data sources.

AIP framework can be operationalized with a training phase associated with a training pipeline and an inference phase associated with inference pipeline. For example, the training phase can include analyzing up to 180 days of historical customer telemetry on a regular cadence (e.g., once a week) and the inference phase can include updating a security incident queue every 15 minutes to provide real-time prioritization. The dual pipelines - that include the training phase and the inference phase configuration - ensure that the rankings are current and actionable.

In this way, AIP framework supports security incident prioritization based on assessing and ranking security incidents based on their severity, potential impact, and urgency to ensure that the most critical issues are addressed first. Security incident prioritization is essential for directing SOC analysts' attention to the most high-risk and impactful threats. Currently, the security management systems lack a feature for ranking incidents, which leaves analysts uncertain about how to prioritize their investigation efforts. The adaptive incident prioritization engine addresses a significant challenge for large SoCs that manage thousands of incidents daily, as the absence of clear prioritization can lead to inefficiencies and delays in responding to the most pressing threats.

To effectively prioritize security incidents in a security incident queue, the AIP framework quantifies the risk that a security incident poses to a computing environment in relation to other security incidents in the queue. To achieve this, the AIP framework uses the National Institute of Standards and Technology (NIST) definition of risk as the basis for incident prioritization score. This approach allows an adaptive incident prioritization engine to assess and rank security incidents by their potential impact and likelihood, ensuring that the most critical threats are addressed first. Risk is a measure of the extent to which an entity is threatened by a potential circumstance or event, and is typically a function of: (i) the adverse impacts that would arise if the circumstance or event occurs; and (ii) the likelihood of occurrence.

$$\text{Risk} = \text{Impact} * \text{Likelihood}.$$

While this equation provides general guidance on calculating an incident's risk, the actual quantification of impact and likelihood is a challenging task. Below, the AIP framework is described along with how to quantify an incident's impact to effectively prioritize incident queues. It is assumed that the security incidents are True Positives (TPs) and the AIP framework incorporates detector signal-to-noise ratio (SNR) into the queue ranking by up-weighting rarer alerts.

By way of context, BM25 is a ranking function or algorithm used in search engines and information retrieval systems to determine how relevant a document is to a query. It combines factors like term frequency (how often a term appears in a document), inverse document frequency (how rare a term is across the document collection), and document length normalization. The formula adjusts for the frequency of terms and the length of documents to provide a relevance score, helping to rank documents more effectively. BM25 is valued for its robustness and is widely used in various text-based search applications.

The AIP framework leverages a BM25 algorithm, which is traditionally used to rank the relevance of documents in search results, and adapts it to security incident prioritization. Here, security incidents are analogous to documents, and security incident ranking components (e.g., MITRE techniques, categories, severity levels) are analogous to words. This model helps quantify the significance of various security incident ranking components and prioritizes incidents based on their potential impact.

Several key insights inherent to the AIP framework make it a strategic tool for incident prioritization. They include security incident diversity, security incident rarity, incident size, MITRE framework, and a natural language explanation mechanism. With reference to security incident diversity, by analyzing the variety of attack vectors, kill chain stages, and techniques, the calculations gauge the potential severity and scope of a security incident. Often times, the most devastating security incidents are often diverse in terms of the kill chain stages, products, alerts, and MITRE techniques involved Therefore, the more diverse the incident, the more likely it is to negatively impact a customer. As such, the AIP approach measures the importance of diverse security incident ranking components by considering their frequency and distribution across all incidents. The local weight of a security incident ranking component is calculated using its frequency, while the global weights capture the distribution of this attribute across all incidents.

With reference to security incident rarity (e.g., alert rarity), the rarer the security incident, the more likely it is to be highly damaging. For example, high fidelity alerts (e.g., crypto-mining, ransomware) are observed way less frequently compared to an alert like "Impossible Travel Activity". An "Impossible Travel Activity" alert is a security feature used by organizations to detect potentially unauthorized access to accounts. It typically occurs when a user is logged in from two locations that are geographically far apart in an unreasonably short time frame-like logging in from New York and then from Tokyo within minutes. These alerts are meant to flag unusual behavior that could indicate account compromise, prompting further investigation or additional security measures, such as requiring verification or a password change. Rarer alerts also tend to have higher SNR ratios compared to more common alerts, allowing for a natural integration with incident likelihood. Signal-to-Noise Ratio (SNR) refers to the quality of the alert. A higher SNR means that the alert is more likely to indicate a real issue rather than a false positive or trivial matter (the "noise"). As such, the algorithm assigns higher weights to rarer security incident components, ensuring that rare security incident components which have high informational content are given more importance.

With reference to security incident size, the number and type of alerts can indicate the scale of a security incident. A larger number of alerts, especially if they are diverse and rare, can signify a more complex and potentially more damaging incident. By aggregating the weighted frequencies of all security incident ranking components within a security incident, the algorithm captures the overall size and complexity of the security incident. Larger incidents, with more security incident ranking components, will have higher total score.

The MITRE ATT&CK framework categorizes cyber threats based on their tactics, techniques, and procedures (TTPs), providing a structured and comprehensive understanding of attack stages. By injecting domain knowledge into the security incident scoring system based on the alert's category, the AIP framework enhances the relevance and accuracy of threat assessments. The AIP framework includes security incident category attribute that aligns with MITRE ATT&CK stages, ensuring that the security incident score reflects the strategic importance of the threat within the attack lifecycle.

In this way, Term Frequency (TF) and Inverse Document Frequency (IDF) that encapsulate their roles in information retrieval and text analysis can be adapted for security incident prioritization. In particular, Term Frequency (TF) can be a local relevance metric and Inverse Document Frequency (IDF) can be a global relevance metric. The overall security incident score in the BM25 algorithm is calculated by evaluating each security incident ranking component contribution based on its frequency and uniqueness, providing insights into which security incident ranking components contribute to the prioritization of one incident over another. For example, each security incident ranking component (e.g., MITRE technique, category) gets a score that reflects how often it appears and how unique it is across all security incidents. These individual scores are then summed up to produce the total score for the security incident. By calculating these scores, insights into which security incident ranking components drive the security incident's importance are determined to facilitate making informed decisions on which security incidents to address first.

The security incident ranking components refer to security incident attributes that are used in calculating security incident prioritization scores. The process of prioritizing incidents can specifically rely on security incident ranking component that are metadata components that provide context and detailed information about each incident. The following metadata components (e.g., category, severity, Indicator of Attack (IoA) definition identifier, MITRE technique, ThreatArticle, IsDisputed, and HeroScenarioTags) are aggregated from individual alerts into a single bag of security incident ranking components that contribute to the calculation of the security incident prioritization score. The category component classifies the type of incident (e.g., malware, phishing, unauthorized access). The severity component indicates the potential impact of an alert on the organization. It is contemplated that this field may not be standardized across 1st and 3rd party products, or even between detectors within the same product.

IoaDefinitionId refers to the presence of certain IoAs that can elevate the prioritization score based on their known risks and complexities since they are naturally less frequent. IoA is a specific pattern or behavior that indicates a potential attack or malicious activity. The IoaDefinitionId is a unique identifier used to reference a particular IoA definition within a security system, allowing for consistent tracking and management of threat indicators. MITRE Technique components maps the incident to specific techniques in the MITRE ATT&CK framework, providing insight into the tactics used by adversaries. ThreatArticle component is associated with references to threat intelligence articles provide additional context and information about the incident. IsDisrupted: indicates whether the incident has already caused a disruption to services or operations. HeroScenarioTags are tags that highlight incidents fitting predefined critical scenarios or high-profile threat patterns.

The modular design of the BM25 algorithm model allows for seamless integration of additional information into the scoring mechanism, enhancing its versatility and effectiveness. This adaptability means that any categorical feature that can be calculated at the incident level, can be directly incorporated into the scoring process. For example, this could include data points on high value assets (e.g., users, devices, files) from Extended Security Posture Management - XSPM, or threat actor tags from a cybersecurity intelligence center (e.g., Microsoft Threat Intelligence Center - MSTIC).

Data Points on High Value Assets from XSPM can refer to information about critical assets within an organization, such as key users, important devices, or sensitive files. XSPM systems often collect and analyze data about these assets to monitor their security status and potential risks. Threat Actor Tags from MSTIC indicates information about known threat actors (individuals or groups involved in cyber-attacks) that can be tagged or identified by MSTIC. These tags help in understanding and attributing threats based on the behaviors or tactics of known adversaries.

By including additional features such as these, the model can provide a more comprehensive assessment of each incident's significance, ensuring that all relevant factors are considered in the prioritization process. This extensibility makes the model easy to update and future-proof, capable of evolving with emerging threats and telemetry sources.

Adapting BM25 algorithm's components to support ranking security incidents can be based on diversity, rarity, and size of security incidents. At a first step, a local relevance metric is calculated (i.e., calculate Term Frequency - TF), at a second step a global rarity metric (i.e., calculate Inverse Document Frequency - IDF) is calculated, and at a third step score, each security incident component based on the local relevance metric and global rarity metric is calculated.

With reference to "calculate TF" of the first step, in this step, each security incident component such as MITRE techniques, categories, severities, is calculated as a term in an incident (document). The term frequency for each security incident component c in a security incident *i* is calculated using the formula:

$$tf(c,i) = \frac{f_{c,i} \cdot (k_1 + 1)}{f_{c,i} + k_1 \cdot \left(1 - b + b \cdot \frac{|i|}{avg_{dl}}\right)}$$

Term frequency for each component in an incident

Where $f_{c,i}$ is the frequency of security component c in incident *i*. The $k_1$ value controls how quickly the term frequency score saturates as it increases, reducing the dominance of frequently occurring components and ensuring that rarer components are not overshadowed. A high value of $k_1$ (e.g., 2.0) will mean that higher term frequencies will contribute more significantly to the score, while a low value of $k_1$ (e.g., 0.5) means that the term frequency will quickly saturate and have diminishing returns in the overall score. The *b* parameter controls the degree of normalization for document length, determining how much the length of a document influences its relevance score. A high value of *b* (i.e., close to 1) will mean that longer documents are more heavily penalized, while a low value of *b* (i.e., close to 0) means that document length will have little to no impact on the relevance score.

With reference to "calculate IDF" of the second step, in this step, to calculate the global informativeness or rarity of each security incident component, the inverse document frequency of each security incident component c is calculated as:

$$IDF(c) = \log\left(\frac{N - n_c + 0.5}{n_c + 0.5}\right)$$

Inverse document frequency of each component

where *N* is the total number of incidents in the corpus and $n_c$ is the number of incidents containing component *c*. This allows us to measure the importance of a term in the entire collection of documents. Terms that appear in many documents are less informative, and their IDF is lower.

With reference to the third steps - scoring (e.g., a security incident prioritization score or BM25 score) for each security incident - the weighted frequencies of all security incident components within a security incident are aggregated to determine its overall significance. The score for a security incident *i* is given by:

$$Score(i) = \left(\sum_c IDF(c) \cdot TF(c,i)\right)$$

Overall score for an incident

Combined, this score reflects a security incident's diversity, rarity, and size, providing a comprehensive measure of the incident's overall impact. Higher scores indicate incidents with significant and unique components, ensuring that the most critical incidents are prioritized. The overall incident score in the BM25 algorithm is calculated by evaluating each component's contribution based on its frequency and uniqueness (i.e., local relevance metric and global rarity metric). Each security incident component gets a score that reflects how often it appears and how unique it is across all incidents. These individual scores are then summed up to produce the total score for the incident. By examining these scores, we can see which components drive the incident's importance and make informed decisions on which incidents to address first.

In one optimization implementation, an evaluation of 100 incident queue rankings across a grid search of BM25 scores from $k_1$ = {0.5, 1, 1.2, 1.5, 2.0} and *b* = {0, 0.25, 0.5, 0.75, 1}, the optimal values as $k_1$ = 0.5 and *b* = 0 were identified. Lowering $k_1$ to 0.5 reduces the emphasis on term frequency. Thus, even if a term appears frequently within a document, its influence on the score will be moderated. This helps in avoiding situations where documents with very high term frequencies dominate the ranking, which may not always correlate with higher relevance. The parameter b controls the degree of length normalization. When *b* = 0, the effect of document length normalization is entirely removed from the BM25 formula. This means that all documents, regardless of their length, are treated equally in terms of their length when calculating relevance scores.

The AIP framework for security incident prioritization can be fully productionized and operational on a cloud computing environment (e.g., DSP platform). This is achieved through a dual job pipeline setup, which includes: (1) a training job that analyzes historical customer incident telemetry to calculate inverse document (IDF) frequencies for the BM25 algorithm; and (2) an inference job that processes new incoming incidents and ranks them according to the BM25 algorithm and IDF frequencies calculated in the training phase. Together, these jobs balance the need for historical analysis and rapid real-time processing, maintaining high model performance and reliability. The AIP framework can be operationalized with a training phase associated with a training pipeline and an inference phase associated with inference pipeline. For example, the training phase can include analyzing 30 days of historical customer telemetry once a week, and the inference phase can include updating a security incident queue every 15 minutes to provide real-time prioritization. The dual pipelines that include the training phase and the inference phase configuration ensures that the rankings are current and actionable.

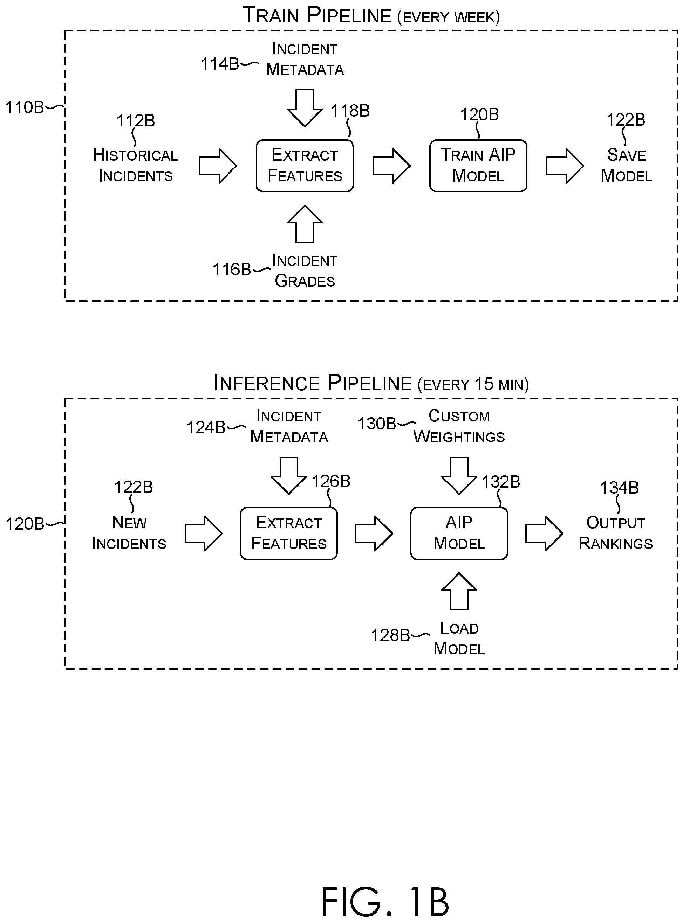

By way of illustration, a training job in the training pipeline may run once a week in a cloud computing environment, analyzing 30 days of historical customer telemetry to ensure the model remains up to date with recent incident patterns and trends. As shown in FIG. 1B, the training pipeline 110B is responsible for building the foundational model, and involves the following steps: data collection, preprocessing, calculating inverse document frequencies, and model saving. During data collection, the training pipeline gathers 30 days of historical telemetry contain security incident component (e.g., key incident components: (1) MITRE techniques, (2) categories, (3) severity levels, and (4) IoaDefinitionIds). The training pipeline processes the data to a standard format, aggregating alerts into incidents and calculates the IDFs in order to measure the importance of a term (i.e., a security incident component) in the entire collection of security incidents. Terms that appear in many incidents are less informative, and their IDF is lower. BM25 uses IDF to give more weight to terms that are rare across the incident corpus. The training pipeline saves the IDF frequencies (e.g., a blob storage) and logs the model version information inside a database table.

On the other hand, the inference job in the inference pipeline operates every 15 minutes in the cloud computing environment, ensuring real-time prioritization of incoming incidents. As shown in FIG. 1B, the inference pipeline applies the trained model to new incidents in real-time, ensuring timely and accurate prioritization. It includes the following steps: data ingestion, preprocessing, feature extraction, Term Frequency (TF), Inverse Term Frequency (IDF), document length normalization, scoring and ranking, and output generation.

During data ingestion, the inference pipeline continuously receives new incident data in 15 minute batches from cloud computing environment and for pre-processing can employ the same preprocessing steps used in the training pipeline to ensure consistency in data formatting and aggregation. Feature extraction is employed to convert the new incidents into the BoW (bag of words) representation using the term frequencies and components identified during training.

With reference to TF, the frequency of a term in a document. BM25 uses a saturation function controlled by parameter $k1$ to handle term frequency, which means the relevance score increases with the term frequency but at a decreasing rate. This prevents terms that appear very frequently in a document from having a disproportionately large impact on the score; and turning to IDF, the IDF measures the importance of a term in the entire collection of documents. Terms that appear in many documents are less informative, and their IDF is lower. BM25 uses IDF to give more weight to terms that are rare across the document collection.

The AIP engine includes a normalization component parameterized by b to account for document length. It determines how much the length of a document influences its relevance score. For scoring and ranking, the AIP engine used the BM25 algorithm to calculate scores for each new incident. This involves applying the log-transformed term frequencies and entropy values to rank the incidents based on their overall significance. A score and explanation for every incident in the batch is generated.

By way of illustration, a data science platform (DSP) can be provided to manage and execute machine learning workflows across various computing environments, specifically instances X, Y, and Z. Each instance within the DSP serves a different computing environment, providing tailored resources and configurations to meet specific operational needs of the computing environment. In this setup, each DSP instance includes both a training pipeline and an inference pipeline. The training pipeline handles the process of developing and optimizing machine learning models by processing and learning from historical data. This pipeline includes steps such as data preprocessing and model training. The inference pipeline, on the other hand, manages the deployment and application of trained models to new data, generating prioritization scores as required. The adaptive incident prioritization engine functionality integrated into each pipeline allows for evaluating and scoring security incidents based on the trained adaptive incident prioritization models, optimizing decision-making processes. Overall, the DSP provides a flexible and scalable solution for managing machine learning workflows, enabling efficient model training and deployment across diverse computing environments.

The AIP framework provides an adaptive incident prioritization engine that uses customer feedback-simple "thumbs up" or "thumbs down" ratings on incident prioritization decisions-to dynamically adjust its scoring algorithm, tailoring relevance to actual customer needs. This adaptive feedback loop enables the prioritization system to fine-tune its feature weightings based on real-world interactions, making its rankings more precise and personalized over time. Customer feedback serves as the core input to refine prioritization accuracy. As customers interact with the incident prioritization system, they can provide ratings that reflect the system's relevance to their unique environment. A "thumbs up" might indicate that the system correctly identified an incident as critical, while a "thumbs down" may signal that the importance of the incident was misjudged.

The adaptive incident prioritization engine uses feedback to adapt the weighting of features within the BM25 algorithm, which calculates scores based on several factors, including severity level and asset criticality. Feedback is integrated as follows: Positive Feedback (Thumbs Up): When customers provide positive feedback, the system adjusts the weight of the relevant features upward. This enhancement subtly boosts the importance of these attributes in the scoring process, reinforcing them for future incident assessments. Negative Feedback (Thumbs Down): Negative feedback, conversely, results in a slight reduction in feature weights for specific characteristics. This helps the system recalibrate to reduce the influence of these elements in similar future scenarios, adapting based on customer preferences.

With each round of feedback, the algorithm iteratively learns and refines its feature weighting, adjusting relevance scores over time. The more feedback is received, the more accurately the system aligns with the specific needs of each customer, gradually evolving through this iterative learning process. The adaptive incident prioritization engine leverages feedback to create personalized scoring models. For instance, if a customer frequently downvotes incidents that include certain threat indicators, the system learns to deprioritize these indicators in future cases, aligning prioritization more closely with that customer's environment. This feedback-driven approach allows for highly customized responses, giving customers prioritized results that reflect their unique incident handling needs.

Feedback aggregation allows for both global and individual adaptations to the prioritization algorithm. While global feedback from multiple customers can lead to broad improvements in scoring for common security incidents, individual customer feedback allows for fine-tuning that is specific to each environment. This dual-layered approach provides both a universally accurate model and personalized scoring, ensuring a balance between general relevance and customized effectiveness.

**EXAMPLE SYSTEMS AND RESOURCES**

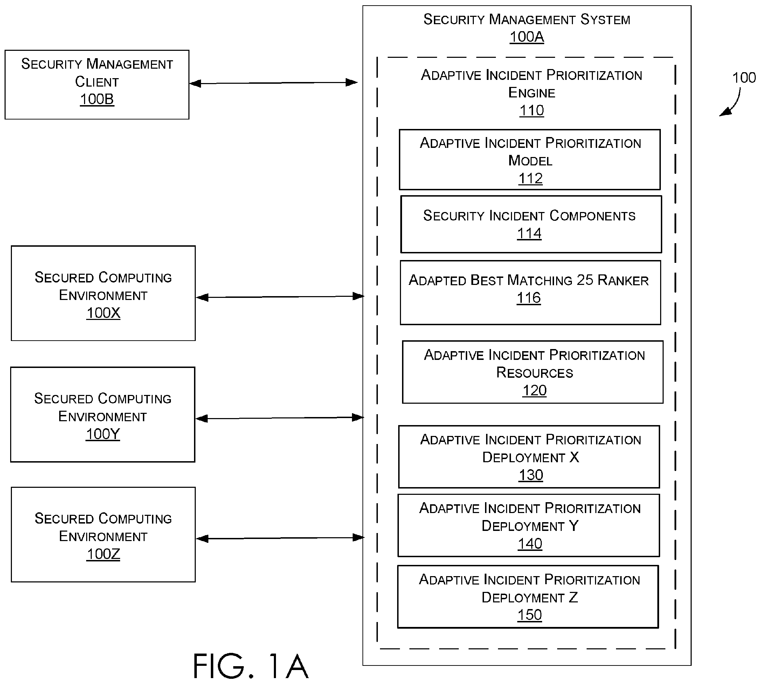

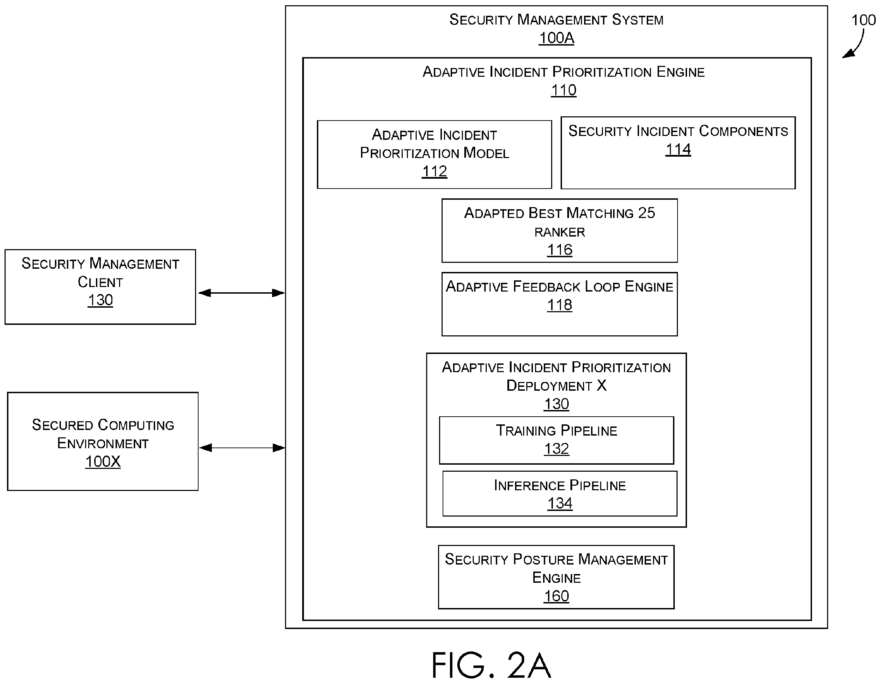

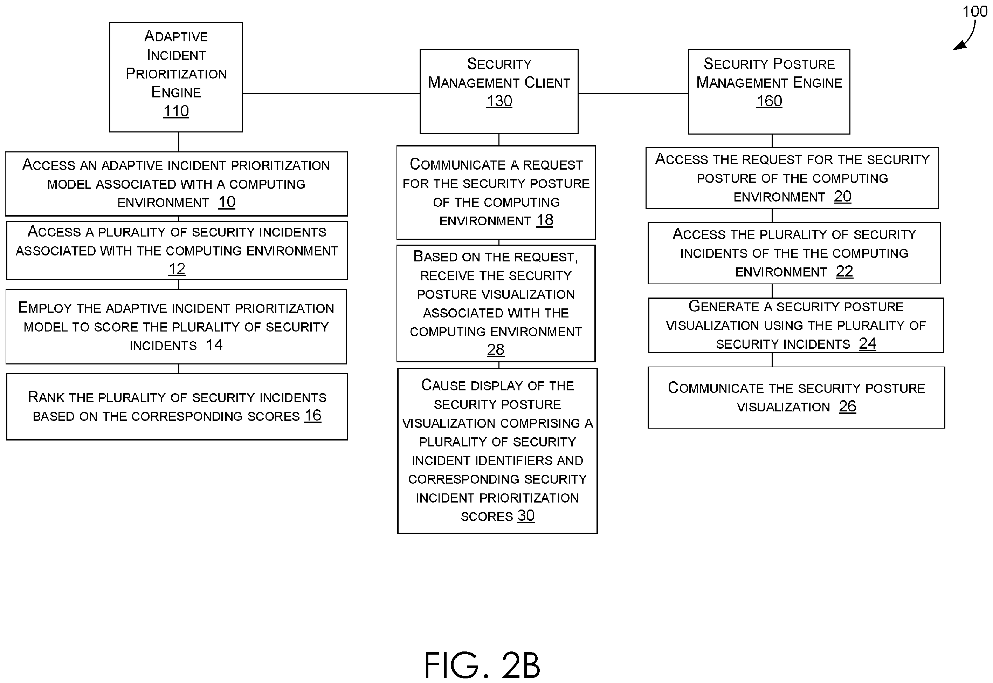

Aspects of the technical solution can be described by way of examples and with reference to FIGS. 1A - 1D, 2A and 2B. FIG. 1A illustrates a cloud computing environment (system) 100, security management system 100A, security management client 100B; adaptive incident prioritization engine 110, adaptive incident prioritization engine 110, adaptive incident prioritization model 112, security incident components 114, adapted best matching 25 ranker 116, adaptive incident prioritization resources 120, adaptive incident prioritization deployment X 130, adaptive incident prioritization deployment Y 140, adaptive incident prioritization deployment Z 150; secured computing environment 100X, secured computing environment Y, and secured computing environment 100Z.

Adaptive incident prioritization engine 110 utilizes historical and real-time incident data to assess, rank, and display the severity of security threats within a computing environment. Security management system 100A includes key resources, engines, and algorithms designed and structured to dynamically prioritize incidents in separate secured computing environments. Security management system 110 adaptive incident prioritization engine 110 which runs on adaptive incident prioritization resources 120-including data, interfaces, and operations for calculating and displaying incident prioritization scores. The adaptive incident prioritization engine 100 relies on various adaptive incident prioritization resources 120 (e.g., data, interfaces, and operations). Data include: historical security incidents, real-time incident metadata, and calculated relevance and rarity metrics. Interfaces include: interactive dashboards displaying incident scores, rankings, and explanations for security teams. Operations include: ongoing training, feature extraction, and model deployment to ensure the prioritization engine adapts to emerging threats.

Security management system 100A enables a modular and adaptive model (e.g., adaptive incident prioritization model 112) that can be deployed in multiple secured environments (e.g., adaptive incident prioritization deployment X, adaptive incident prioritization deployment Y, and adaptive incident prioritization deployment Z). This separation enables tailored threat prioritization for each environment, as the model's training and inference phases can adapt to unique incident data in each location.

Adaptive incident prioritization engine 100 is structured around two primary processes: (1) training adaptive incident prioritization model 112 using historical security data and (2) applying adaptive incident prioritization model 112 model to score and rank real-time security incidents. Adaptive incident prioritization engine 100 begins by analyzing historical security data across a range of security incidents within a computing environment.

By way of illustration, adaptive incident prioritization engine 100 retrieves data from previous incidents within secured computing environment 100X, covering a diverse range of incident types. Each incident includes metadata and other relevant attribute (i.e., security incident components 114) which could encompass factors like IP address, device type, access time, user role, and threat type. In each security incident, various components (metadata) are identified and cataloged. These security incident components 114 are used for analyzing and ranking incidents effectively.

Using an adaptation of the Inverse Document Frequency (IDF) algorithm from the BM25 model (i.e., adapted best matching 25 ranker 116), the adaptive incident prioritization engine 100 calculates global rarity metrics for each security incident component. This metric quantifies the rarity of each component, indicating how uncommon or unique each feature is across the historical dataset. Rare components are given higher scores, emphasizing incidents with unique threat characteristics. Adapted Best Matching 25 (BM25) ranker 116 is at the core of the prioritization algorithm, which adjusts both term frequency and document frequency metrics to derive: local relevance metrics: based on frequency of incident components within a specific incident; and global rarity metrics: based on the uniqueness of incident components across all incidents. With these global rarity metrics, the adaptive incident prioritization engine 100 then trains the adaptive incident prioritization model 112. Adaptive incident prioritization model 112 learns to prioritize incidents based on the combination of rare and impactful components, enhancing its ability to identify and rank critical incidents.

Once trained, adaptive incident prioritization model 112 can be deployed for in real-time incident scoring. Adaptive incident prioritization model 112 model can be deployed into different secured computing environment deployments (e.g., secured computing environment X, secured computing environment Y, and secured computing environment Z). It is contemplated that adaptive incident prioritization model 112 can provide adaptive prioritization based on each environment's specific incident characteristics.

When a new security incident is detected, a secured computing environment leverages the trained model to assess and rank it. For example, when a new security incident occurs in secured computing environment 100X, it is identified and registered in the secured computing environment 100X, including various security incident components. Adaptive incident prioritization deployment 100X (i.e., an instance of adaptive incident prioritization model 112) calculates local relevance metrics for each component. This is based on the term frequency adaptation in BM25, reflecting how frequently each security incident component appears within a single incident. Higher frequencies indicate higher relevance for that specific incident. Adaptive incident prioritization deployment 100X accesses the global rarity metrics previously calculated during model training. This allows the model to contextualize local relevance in relation to the rarity of incident components across all historical data. Using the adaptive incident prioritization model, the adaptive incident prioritization deployment 100X scores the incident by combining the local relevance and global rarity metrics. This prioritization score quantifies the incident's severity and criticality. Incidents with higher scores-often featuring unique and highly relevant components-are ranked higher in the system.

Security management client 100B is a remote interface used by user (e.g., security administrators) to access and manage the prioritized list of incidents. Through this client, administrators can view detailed explanations of prioritization scores, enabling them to respond effectively and align resources with the most critical threats. A security incident identifier and prioritization score for an incident are displayed on a security incident prioritization interface. Additionally, adaptive incident prioritization explanation data provides a rationale for the score, detailing which components contributed most significantly to the incident's prioritization. This enables security teams to understand and justify response actions based on the incident's characteristics.

With reference to FIG. 1B, the adaptive incident prioritization includes a two-stage process: the train pipeline 110B and the inference pipeline 120. Train pipeline 110 is the foundation for developing the Adaptive Incident Prioritization (AIP) model. Train pipeline 110 utilizes historical incident 112B data, which includes past records of various security incidents, and incident metadata 114B which captures critical attributes like incident type, impact level, and context; and incident grades 116B, which label incidents based on severity, urgency, and historical responses.

Train pipeline 110 feature extraction - extract features 118B - is responsible for identifying key characteristics and patterns within incidents. These extracted features are then used to train the AIP model 120B, which leverages the BM25-based algorithm to analyze relevance (local security relevance metric) and rarity (global security rarity metric) of incident data. Upon training completion, the model is saved - save model 122B - to facilitate easy access and future use in the inference pipeline.

Inference pipeline 120B applies the trained AIP model to newly detected incidents. Inference pipeline 120B starts with new Incidents 122B that are freshly reported in a computing environment and their associated incident metadata 124B. Similar to the training stage, feature extraction - extract features 126B - identifies relevant characteristics and attributes from these new incidents124B.

Once the features are extracted, the load model 128B stage pulls the trained AIP model from storage, allowing the model to be applied to current data. Custom weightings 130B can be applied which adapt the model to reflect the unique context of the current environment or incident types. Using these custom weightings 130, the AIP model 132B assigns prioritization scores to incidents based on their relevance and rarity, generating output rankings 134B. These rankings serve as a prioritized list, ensuring the most critical and impactful incidents are addressed first, maximizing resource efficiency and response effectiveness.

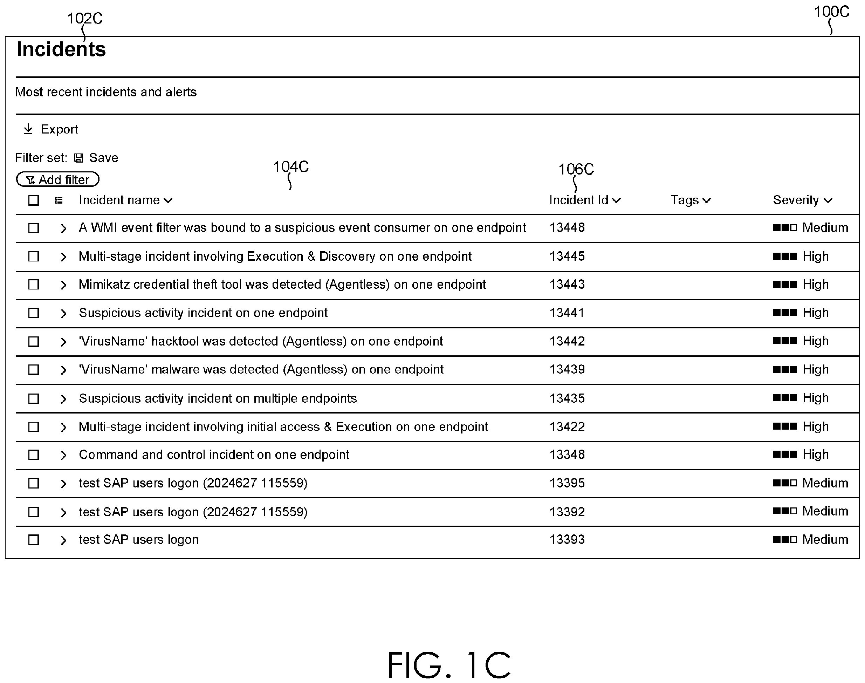

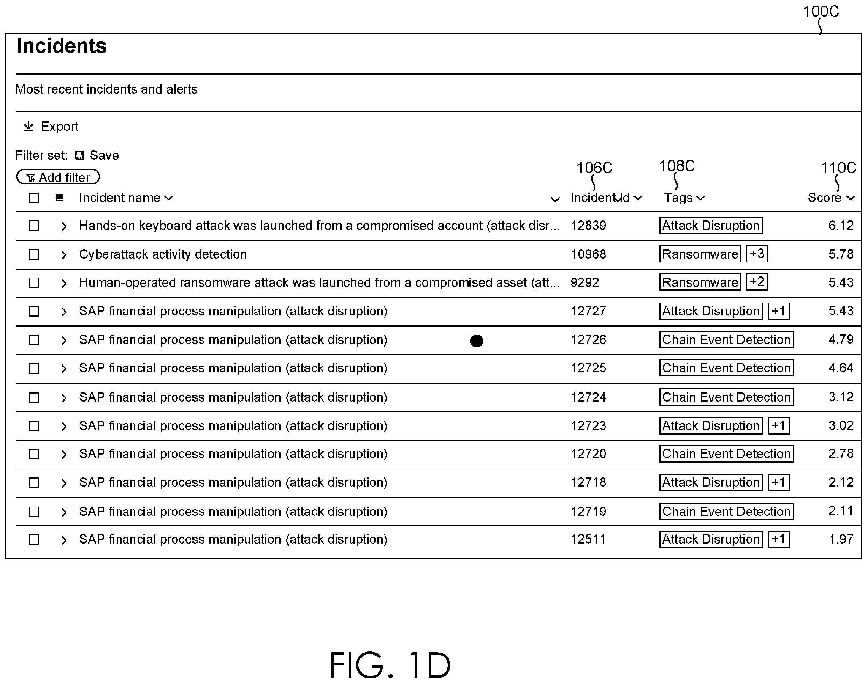

With reference to FIGS. 1C - 1D, a security incident queue can be prioritized by time addresses incidents in the order they are received. While this method is simple, it overlooks the varying severity and potential impact of different incidents. Critical threats that could cause significant damage may remain unresolved while less severe issues are handled first as shown in FIG. 1C. This can lead to inefficient use of resources and potentially allow high-risk incidents to escalate, compromising the security posture of the organization. Alternatively, prioritizing an incident queue through AIP as shown in FIG. 1D, allows SOCs to effectively focus resources on the most critical threats.

Operationally, an adaptive incident prioritization engine 110 can be associated with a graphical user interface (e.g., a GUI 100C of security management client 100B). The GUI 100C supports managing and prioritizing security incidents based on a comprehensive view of various security threats, their security incident components, and their security incident prioritization scores. By way of example, the GUI 100C may include a dashboard overview 102C that provides a snapshot of the total number of incidents categorized by type-such as malware, phishing, and unauthorized access. The dashboard overview 102C can include incident list that displays all security incidents 104C in a detailed table format. This table includes columns for Incident ID, Tags, Type, Severity Score, Status (e.g., New, In Progress, Resolved), and Date Detected. Users can sort incidents by severity, date, or type and apply filters to view specific categories, such as high-priority incidents. Selecting an incident from the list opens the incident details panel, which provides in-depth information. This includes the, for example, Incident ID 106C, a description of the threat, affected systems, the severity score, the current status, and a timeline of events. As shown in FIG. 1D, the dashboard overview may also include Incident ID 106C, tags 108C, and score 110C. The panel may also offers recommended actions and historical context for similar past incidents. A key feature of the GUI is prioritization and actions section, where incidents are displayed with visual indicators of their prioritization scores. This section may include action buttons to mark incidents as reviewed, assign them to team members, update their status, or escalate them as needed.

One of the GUI's most critical features is its real-time updates capability. This includes the capacity for the GUI to incorporate new security incidents as they are detected, with the interface automatically refreshing to incorporate new data. For instance, if a new security incident occurs, such as an unauthorized access attempt with a security incident prioritization score, the GUI promptly updates to reflect this. By way of example, initially, the incident list might show an entry for Incident ID 001, categorized as phishing with a security incident prioritization score of 6.12, marked as "New," and detected on August 20, 2024. The details panel for this incident would describe a suspicious email with potential phishing links affecting email servers, recommending an investigation into the email source and affected accounts. If a new incident, Incident ID 002, is detected on the same day, categorized as unauthorized access with a critical severity score of 8.5, the GUI immediately updates. This new incident appears at the top of the list, highlighted with a prominent indicator due to its higher security incident prioritization score. The incident details panel now shows this unauthorized access attempt from an external IP address, affecting user accounts and access logs, with recommended actions including a review of access logs, resetting compromised credentials, and alerting affected users. This automatic and organized updating ensures that security teams can quickly identify and address the most critical threats, maintaining an effective and responsive security posture.

It is contemplated that technical solution described herein can applied to other types of term frequency and inverse document frequency ranking algorithms (e.g., TF-IDF, Log Entropy) beyond BM25. These ranking algorithms incorporate mechanisms to balance local document relevance with global term rarity. In particular, TF-IDF provides a straightforward product of local frequency and global rarity, Log Entropy Model offers a probabilistic approach to understanding term distribution, and BM25 adds further sophistication with parameterized adjustments for term frequency and document length.

By way of illustration, TF-IDF is a widely used statistical measure in information retrieval and text mining that assesses the importance of a word within a document relative to a corpus of documents. It combines two key components: Term Frequency (TF) and Inverse Document Frequency (IDF). Term Frequency (TF) measures how frequently a term appears in a specific document. The underlying assumption is that terms appearing more frequently within a document are likely to be more significant to that document. This local metric captures how relevant a term is to a particular document. Inverse Document Frequency (IDF) gauges how important a term is across the entire corpus. It adjusts for the fact that some terms may be very common and thus less informative. In essence, TF-IDF seeks to quantify the importance of a term in a document by considering both its frequency within the document and its rarity across the corpus.

The Log Entropy Model is rooted in probabilistic information retrieval and is associated with quantifying the distribution and significance of terms across a corpus. The model employs the concept of entropy, which measures the amount of uncertainty or disorder related to the term distribution. Entropy is a measure of the unpredictability of a term's occurrence across documents. An entropy calculation can reflect the uniformity of a term's distribution. If a term is spread out evenly across many documents, its entropy will be high, suggesting less specific relevance. Conversely, a term with low entropy is more concentrated in fewer documents, indicating higher rarity.

Local relevance in the Log Entropy Model is inferred from how the term's distribution varies within documents. The more unevenly distributed a term is within a document, the more significant it may be considered for that document. Global rarity is indirectly reflected through entropy. A term with high entropy is less rare on a global scale, while a term with low entropy is more concentrated and thus rarer across the document set.

BM25 is a probabilistic retrieval model derived from the probabilistic information retrieval framework, and it is a member of the Okapi BM model family. BM25 refines the term frequency-inverse document frequency model with additional parameters to address term frequency saturation and document length normalization. Local relevance in BM25 is determined by term frequency, adjusted with a saturation function to prevent excessively high values, reflecting the term's relevance within the document. Global rarity is accounted for by the IDF component in BM25. This component measures the term's global distribution, adjusting the term's importance based on its frequency across the entire document collection. Rarity in the context of an adapted IDF in adaptive incident prioritization refers to how infrequently a security incident component appears across a collection of security incidents. The rarer a security incident component is-i.e., the fewer security incidents it appears in-the higher its IDF score, indicating that the security incident component is more unique and informative. Rarity can further be defined based on a specific percentage or numerical threshold. Rarity as a percentage threshold, where a security incident component is considered "rare" if it appears in fewer than a certain percentage of security incidents within the collection-such as less than 5% of the security. Rarity can also be based on a specific IDF score threshold, classifying a security incident component as rare if its IDF score exceeds a predetermined value, for example, an IDF score of 2.0 or higher. Alternatively, rarity can be defined using a security incident frequency threshold, where a security incident component is deemed rare if it appears in fewer than 10 security incidents out of a total of 1,000, indicating its infrequent occurrence.

Local relevance metrics across different models vary in their approaches: TF-IDF evaluates local relevance directly through term frequency (TF), reflecting how often a term appears within a document; the Log Entropy Model infers local relevance by examining the uniformity or unevenness of term distribution within documents; and BM25 measures local relevance using term frequency but includes a saturation function to balance its impact. For global rarity, TF-IDF relies on inverse document frequency (IDF) to gauge how infrequently a term appears across the corpus, highlighting terms that are rare across documents. The Log Entropy Model, on the other hand, uses entropy to indicate global rarity, with lower entropy signifying a term's higher concentration in fewer documents. BM25 employs IDF to adjust a term's importance based on its distribution throughout the corpus, refining the assessment of global rarity by accounting for term frequency across all documents.

In this way, TF-IDF, the Log Entropy Model, and BM25 each expertly balance local document relevance with global term rarity, though they do so in distinct ways - which can be adapted as described above in the technical solution. TF-IDF delivers a direct and intuitive measure by combining term frequency with inverse document frequency. The Log Entropy Model offers a probabilistic perspective, capturing the nuances of term distribution across documents. Meanwhile, BM25 refines the approach with advanced parameterization, adjusting for term frequency saturation and document length normalization. Each model brings its own strengths to the table, enhancing the ability to assess and rank the significance of terms within a corpus.

With reference to FIG. 2A, FIG. 2A illustrates cloud computing environment 100 including (system) 100, security management system 100A, security management client 100B; adaptive incident prioritization engine 110, adaptive incident prioritization engine 110, adaptive incident prioritization model 112, security incident components 114, best matching 25 116, adaptive feedback loop 118, adaptive incident prioritization deployment X 130 including training pipeline 132 and inference pipeline 134, secured computing environment 100X, and security posture management engine.

By way of example, secured computing environment 100X with a complex IT infrastructure can encounter a high volume of security incidents daily. To manage and respond to these security incidents more effectively, secured computing environment 100X implements an adaptive incident prioritization engine 110. Secured computing environment 100X is supported by adaptive incident prioritization deployment X 130 that enables targeted incident response by leveraging real-time prioritization and continuous learning from historical data.

Adaptive incident prioritization engine 110 facilitates real-time scoring, ranking, and response prioritization for security incidents. Adaptive incident prioritization model 112 assesses the relevance and rarity of incident attributes, using the training pipeline 132 for continuous improvements and the inference pipeline 134 to score real-time incidents. Security incident components 114 can include metadata that provides essential context for prioritizing incidents. Adapted Best Matching 25 ranker 116 is an adaptation of the BM25 algorithm, this ranker calculates local relevance metrics (frequency of an incident type within specific incidents) and global rarity metrics (uniqueness of incident types across cases). Security management client 130B provides an interface that allows security teams to monitor prioritized incident lists, with scoring explanations that help guide response actions. Security posture management engine 160 tracks and assesses the environment's overall security posture, using incident prioritization insights to adjust risk levels and mitigation efforts.

To initialize adaptive incident prioritization, the secured computing environment uses the training pipeline 132 to build the adaptive incident prioritization model 112 based on historical data within secured computing environment 100 X. Past incidents and associated metadata are collected and organized as security incident components 114. The adapted Best Matching 25 ranker 116 calculates global rarity (overall uniqueness of components across historical data) and local relevance (frequency of components in specific incidents). Using relevance and rarity data, the adaptive incident prioritization model 112 is trained to rank incidents effectively and is deployed to prioritize live incidents.

Once deployed, the inference pipeline 134 processes new incidents as they arise in the secured computing environment 100X. For instance, a high-priority malware intrusion attempt is detected on a sensitive financial database server. The secure computing environment 100X captures incident metadata, including incident timing, server details, access location, and user role. The inference pipeline 134 uses the adapted Best Matching 25 ranker 116 to evaluate: local relevance metrics: these metrics assess how common certain attributes are in the context of the specific incident, such as the sensitive server and unusual access time, contributing to a high local relevance score; and global rarity metrics: these metrics highlight the rarity of certain components across all historical data. Since incidents involving this database server are uncommon, the global rarity score raises the incident's overall prioritization. Combining relevance and rarity scores, the model generates a high prioritization score, marking the malware intrusion as critical and requiring immediate attention.

Adaptive feedback loop engine 118 supports continuously adjusting its algorithms based on customer feedback. At its core, adaptive feedback loop engine 118 collects and processes feedback to refine the feature weightings in the prioritization model. This ensures that incident prioritization evolves to meet the unique needs of each customer, offering more personalized and precise responses over time.

Operationally, feedback is collected from customers (e.g., through simple "thumbs up" or "thumbs down" ratings on security incidents) with positive feedback signaling that the prioritization was accurate and negative feedback suggesting it was misjudged. Each piece of feedback is accompanied by context, such as the incident type, severity, asset involved, and other relevant details. This context allows the system to adjust its prioritization decisions based on the specific environment of the customer providing the feedback.

Adaptive incident prioritization engine 110 uses detailed metadata from each security incident, such as the severity of the threat, the types of assets involved, and the time of occurrence, to calculate the relevance and priority of incidents. Features like the threat type, attack vector, and affected users are used to measure both local relevance (how often specific incident components appear in a customer's environment) and global rarity (how unique a component is across all historical data). A ranking algorithm called BM25 is used to assess the relevance and rarity of these features, adjusting over time through customer feedback.

Adaptive feedback loop engine 118 employs a customer interface that includes a feedback mechanism, allowing customers to rate incidents, and an incident display, showing a prioritized list of incidents along with scores and rationale for the prioritization. As customers interact with the system, feedback is continuously gathered in real time. Positive feedback results in an increase in the weight of features linked to the prioritization, while negative feedback reduces the importance of features associated with misjudged prioritizations. This process creates an iterative learning loop where the system recalibrates and refines its prioritization model based on new feedback.

Over time, the adaptive incident prioritization engine 110 adapts to both individual customer preferences and broader patterns across multiple customers. If a customer consistently down votes prioritizations based on a specific threat indicator, the model will deprioritize that indicator for that customer's environment. This allows for a highly personalized response to each customer's unique security needs. Simultaneously, aggregated feedback from multiple customers enables the system to adjust its global model, ensuring it remains responsive to broader trends in the security landscape.

Feedback is continuously fed back into the system's training pipeline, ensuring that the prioritization model improves over time. As new feedback is gathered, the model evolves, becoming more accurate in its prioritizations and adapting to emerging trends, new threats, and changing customer preferences. The benefits of the adaptive incident prioritization engine 110 include continuous improvement in prioritization accuracy, personalized responses that align with each customer's security requirements, and adaptability to both individual and global customer needs. This ongoing learning process ensures that the system remains effective and relevant as it evolves alongside the changing security landscape.

Security management client 130B causes display of a prioritized list of incidents to the security team, highlighting the malware intrusion with an explanation for its high score, rooted in the server's sensitivity and irregular access patterns. A security team can be alerted to investigate based on prioritization, immediately addressing the malware intrusion as a high-risk incident. Security posture management engine 160 logs the incident and updates the overall risk assessment for the secured environment. Based on the prioritization score and incident impact, the engine suggests heightened monitoring for high-sensitivity databases. Incident details are fed back into the training pipeline 132, refining the adaptive incident prioritization model 112. This process allows the system to learn from new patterns, improving its accuracy in prioritizing emerging threats.

With reference to FIG. 2B, FIG. 2B illustrates cloud computing environment 100 include adaptive incident prioritization engine 110, security management client 130, and security management engine 160. The adaptive incident prioritization engine, at block 10, accesses an adaptive incident prioritization model associated with a computing environment; at block 12 accesses a plurality of security incidents associated with the computing environment; at block 14, employs the adaptive incident prioritization model to score the plurality of security incidents; and at block 16, ranks the plurality of security incidents based on the corresponding scores.

The security management client 130, at block 22, communicates a request for a security posture of a computing environment. The security posture management engine 150, at block 24, receives the request for the security posture of the computing environment; at block 22, accesses the plurality securing incidents and corresponding scores; at block 26, generates a security posture visualization using the plurality of security incidents; at block 26, communicates the security posture visualization. The security management client 130, at block 28, based on the request, receives the security posture visualization associated with the computing environment; and at block 30, causes display of the security posture visualization.

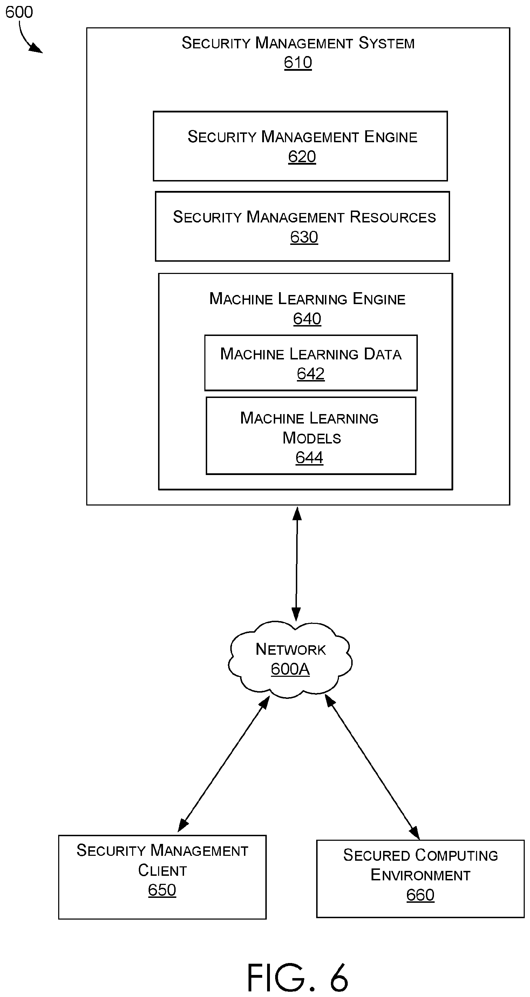

Aspects of the technical solution have been described by way of examples and with reference to FIGS. 1, 2A and 2B. FIG. 1 is a block diagram of an exemplary technical solution environment, based on example environments described with reference to FIGS. 6, 7 and 8 for use in implementing embodiments of the technical solution are shown. Generally the technical solution environment includes a technical solution system suitable for providing the example cloud computing system 100 in which methods of the present disclosure may be employed. In particular, FIG 1 illustrates a high level architecture of the cloud computing system 100 in accordance with implementations of the present disclosure, among other engines, managers, generators, selectors, or components not shown (collectively referred to herein as "components").

**EXAMPLE METHODS**

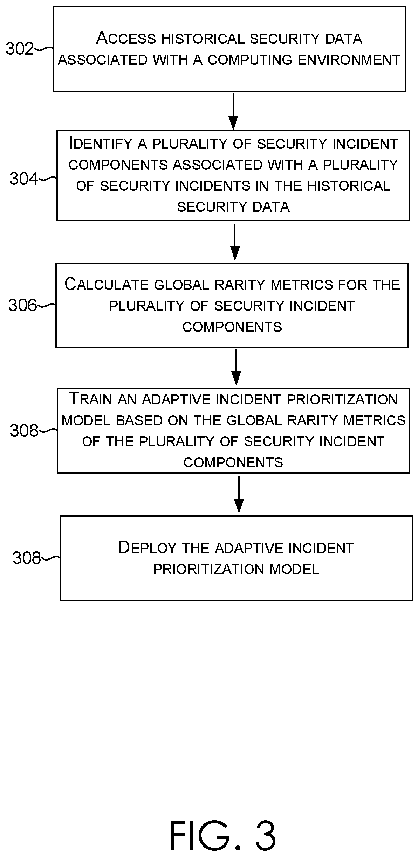

With reference to FIGS. 3, 4, and 5, flow diagrams are provided illustrating methods for providing security incident prioritization management using an adaptive incident prioritization engine of a security management system. The methods may be performed using the security management system described herein. In embodiments, one or more computer-storage media having computer-executable or computer-useable instructions embodied thereon that, when executed, by one or more processors can cause the one or more processors to perform the methods (e.g., computer-implemented method) in the security management system (e.g., a computerized system).

Turning to FIG. 3, a flow diagram is provided that illustrates a method 300 for providing security incident prioritization management using an adaptive incident prioritization engine of a security management system. At block 302, access historical security data associated with a computing environment. At block 304, identify a plurality of security incident component associated with a plurality of security incidents in the historical security data. At block 306, calculate global rarity metrics for the plurality of security incident components. At block 306, updating an adaptive incident prioritization model based on the global rarity metrics of the plurality of security incident components.

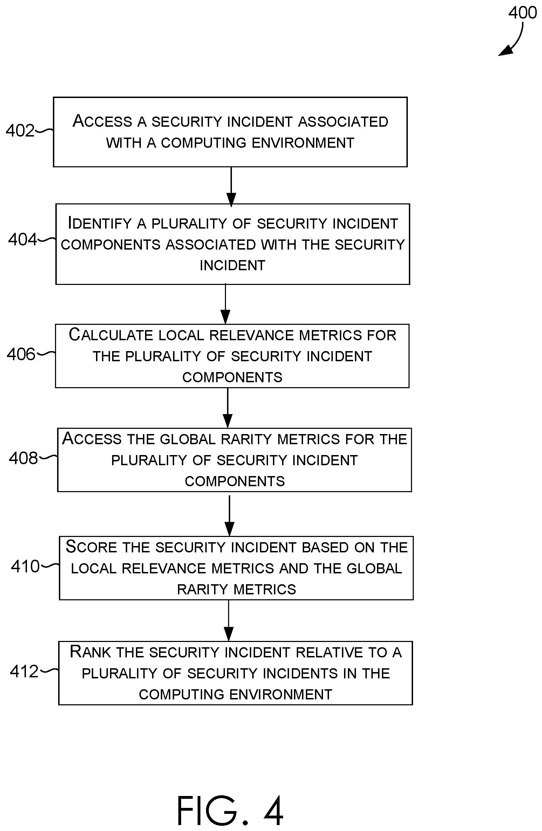

Turning to FIG. 4, a flow diagram is provided that illustrates a method 400 for providing security incident prioritization management using an adaptive incident prioritization engine of a security management system. At block 402, access a security incident associated with a computing environment. At block 404, identify a plurality of security incident components associated with the security incident. At block 406, calculate local relevance metrics for the plurality of security incident components. At block 408, access the global rarity metrics for the plurality of security incident components. At block 410, score the security incident based on the local relevance metrics and the global rarity metrics. At block 412, rank the security incident relative to a plurality of security incidents in the computing environment.

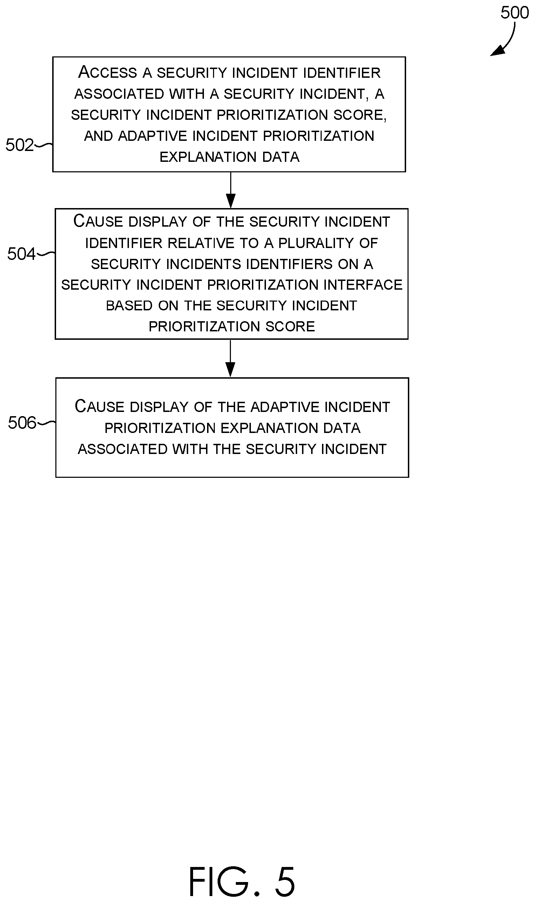

Turning to FIG. 5, a flow diagram is provided that illustrates a method 500 for providing security incident prioritization management using an adaptive incident prioritization engine of a security management system. At block 502, access a security incident identifier associated with a security incident, a security incident prioritization score, and adaptive incident prioritization explanation data. At block 504, cause display of the security incident identifier relative to a plurality of security incident identifiers on a security incident prioritization interface based on the security incident prioritization score. At block 506, cause display of the adaptive incident prioritization explanation data associated with the security incident.

**TECHNICAL IMPROVEMENT**

Embodiments of the present techniques have been described with reference to several inventive features (e.g., operations, systems, engines, and components) associated with a security management system. Inventive features described include: operations, interfaces, data structures, and arrangements of computing resources associated with providing the functionality described herein relative with reference to an adaptive incident prioritization engine. Functionality of the embodiments of the present invention have further been described, by way of an implementation and anecdotal examples - to demonstrate that the operations for providing the adaptive incident prioritization engine as a solution to a specific problem in security management technology to improve computing operations in security management systems.

By way of example, the adaptive incident prioritization engine supports provides security incident prioritization based on an adaptive incident prioritization (AIP) framework built using a ranking algorithm. In particular, the adaptive incident prioritization framework employs a Best Matching 25 (BM25) algorithm and strategically and programmatically adapts the algorithm (e.g., an adaptive incident prioritization model) to rank security incidents based on a local security incident relevance metric (an adaptation of Term Frequency in BM25) and a global security incident rarity metric (an adaptation of Inverse Document Frequency in BM25) associated with security incidents. The adaptive incident prioritization resources (e.g., operations, interfaces, and data) are a solution to a specific problem (e.g., limitations in security incident ranking capability, causing difficulties for analysts in prioritizing investigations, especially in large Security Operations Centers (SOCs) that handle thousands of incidents daily). The prioritization score based on the local security incident relevance metric and the global security incident rarity metric reflects diversity, rarity, and size of a security incident, providing a comprehensive measure of the security incident's overall impact in a computing environment. Moreover, the adaptive incident prioritization engine can be implemented as a dual job pipeline configuration which includes (1) a training phase and an inference phase.

## ADDITIONAL SUPPORT FOR DETAILED DESCRIPTION

## EXAMPLE SECURITY MANAGEMENT SYSTEM IN A COMPUTING ENVIRONMENT

Referring now to FIG. 6, FIG. 6 illustrates a computing environment in which implementations of the present disclosure may be employed. In particular, FIG. 6 shows a high level architecture of an example cloud computing platform 600 and security management system 610 that can host a technical solution environment. It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The cloud computing environment 100 provides computing system resources for different types of managed computing environments. For example, the cloud computing platform supports delivery of computing services - including compute, servers, storage, databases, networking, and intelligence. The components of cloud computing environment 600 may communicate with each other over a network 600A which may include, without limitation, one or more local area networks (LANs) and/or wide area networks (WANs).

The security management system 610 provides security management functionality for computing environments. The security management system 610 supports planning, implementing, controlling, and monitoring security measures to protect assets, resources, and information from various threats and risks in computing environment. Security management system 610 is configured to trigger alerts for potential or actual threats - including suspicious behavior or malicious behavior - in a computing environment. For example, an alert configuration can be defined to include alert settings, which if met, trigger an alert. The security alert can refer to a human-readable, technical notification regarding current vulnerabilities, exploits, and other security issues associated with a computing environment. The alert can be communicated to a client device that is managed by a security administrator who can then follow up on the alert.

Different types of potential threats and actual threats exist, for example, use of proxies to gain access to a computing environment or unauthorized running of crypto mining software in a computing environment. An attack on a cloud computing environment - for example, performed by a malicious actor - can include several attack operations that are executed to gain access to resources on the cloud computing environment. The attack operations can trigger alerts, when the security system is configured to monitor for these types of attack operations. If multiple attack operations are identified - and a determination that the attack operations are related is made - the alerts associated with the attack operations can be defined as a security incident. The security incident can refer to a collection of correlated alerts and corresponding security data that make up a story of an attack. The attack story can be associated with a security graph and an attack path definition that identifies attack objects (e.g., attack operations, compromised resources, file locations and file types). The attack path can describe how an attacker gained access to a computing environment and related operations and computing resources associated with the attack and unauthorized access. A security incident can advantageously combine multiple alerts associated with a single attack to support managing and responding to the security incident.

The security management system 610 includes a security management engine 620 that is a computing environment that supports executing computational tasks associated with the security management system 610. The security management engine 620 can be a hardware or software component that performs computational operations, such as, mathematical calculations, data processing, and algorithm execution. The security management system 610 integrates security management resources 630 into security management system 610 to effectively provide security management in a computing environment.

The security management engine 610 can be a security posture management engine that is responsible for communicating with security management engine client 660. The security management engine client 660 supports client-side security management operations for providing security management in the security management system 610. The security management engine client 660 supports presenting a security posture visualization associated with security management engine output and communicating an indication to perform a remediation action associated with security management engine output. The security management engine 620 operates to provide visibility to security status of resources in a computing environment. Security posture information can be associated with security management engine output. Security posture information can include security management engine output as described herein with regard to the technical solution.

The security management engine 620 includes a security graph API that provides access to a security graph security graph data. The security graph provides telemetry data associated with a plurality of resources in a computing environment. In particular, the telemetry data can be security data that is associated with security providers in a computing environment. The security graph and security graph API can support integrating security alerts from different security providers via an API connector that streams alerts to the security management engine 620.

The security management engine 620 may assess threats and develop risk scores - using risk assessment operations. A risk associated with security management engine output can used to generate security posture information. In particular, a risk score can refer to a numerical value that represents the level of risk associated with a particular security incident associated with the annotation. It takes into account various factors such as the likelihood of the event occurring and the potential impact of the event if it does occur. The risk score is used to prioritize actions and allocate resources accordingly.

The security management engine 620 can further support generating security posture visualizations based on security management engine output. The security posture information can be generated security management engine output such that security posture information is prioritized and filtered. A prioritization identifier (e.g., high, medium, low) can be provided in the security posture visualization in combination with an alert associated with a security incident. Alternatively, a notification associated with the security management information, security prioritization information or the alert can be communicated. Other variations and combinations of communications associated with security management engine output are contemplated with embodiments described herein.

The security management client 650 can support accessing a security posture visualization and causing display of the security posture visualization. The security management client 650 can include the security posture management engine client that supports receiving security posture information associated security management engine output from the security management system 610 and causing presentation of the security posture information. The security posture information can specifically include security posture visualizations associated with the security management engine output. The secure posture visualization can further include remediation actions associated different alerts - including alerts that are associated with the security management engine output. The security management system can be a security management system described in U.S. Patent Application Serial No. 18/451,405, filed August 17, 2023, entitled "ARTRIFICIAL INTELLIGENCE ENGINE IN A SECURITY MANAGEMENT SYSTEM," which is incorporated herein by reference in its entirety.

The security management client 130 can further support executing a remediation action. In particular, the security posture visualization can include a remediation action for an alert associated with security management engine output. The security management client 130 can receive an indication to perform the remediation action associated with security management engine output. Based on receiving the indication to execute the remediation action, the security management client 130 can communicate the indication to execute the remediation action to cause execution of the remediation action.

The security management resources 630 refer to computing elements (e.g., components, capability, or entities) that collectively enable the security management engine 620 operations. The security management resources 630 encompass a spectrum of computing elements, beginning with the diverse operations the security management resources 630 can perform, ranging from complex computations to data manipulations. Interfaces, an integral part of the security management resources 630, provide the means for both user interaction and seamless integration with external systems, ensuring a dynamic and interactive computing experience. The data facet of the security management resources 630 involves various types: input data, which is the information provided for processing; processing data, representing the data manipulated during computational tasks; and output data, the results generated by the security management engine 620. In this way, the security management resources 630 support the broader security management engine 620 and security management system 610.

Security management resources 630 contextual attack disruption resources that support leveraging contextual information and impact analysis to thwart or mitigate ongoing attacks on a computing environment. Contextual attack disruption resources encompass the core operations, interfaces, and data components within security management system 610, collectively supporting its functionality in overseeing diverse computing environments across the cloud computing system 600. Operations of the contextual attack disruption resources include understanding the normal behavior and processes within the computing environment. This includes monitoring system operations, network traffic, user activities, and application behavior to establish a baseline of normalcy. When an attack occurs, security analysts can analyze the deviation from normal operations to identify anomalies or suspicious activities. By understanding the context in which these deviations occur, such as the timing, sequence, and frequency of events, analysts can assess the severity and potential impact of the attack. Interfaces, including graphical user interfaces, command-line interfaces, web-based portals, APIs, and integration points, facilitate interaction with administrators, end-users, devices, and other cloud computing systems. Data components encompass the storage, processing, and transmission of data within the computing environment. This includes databases, file systems, memory, and data pipelines. Contextual attack disruption in the context of data components involves monitoring data flows, access patterns, and data integrity to detect and mitigate attacks targeting sensitive information.

Machine learning engine 640 is a machine learning framework or library that operates as a tool for providing infrastructure, algorithms, capabilities for designing, training, and deploying machine learning models. The machine learning engine 640 can include pre-built functions and APIs that enable building and applying machine learning techniques. The machine learning engine 140 can provide a machine learning workflow from data processing and feature extraction to model training, evaluation, and deployment.

Machine learning data 642 refers to the structured or unstructured information used to train, validate, and test machine learning models. This machine learning data 642 typically comprises input features (also known as independent variables or predictors) and their corresponding target values (also known as dependent variables or labels). Machine learning data 642 can come from various sources, such as databases, sensor readings, text documents, images, audio recordings, or streaming data sources. Machine learning data 642 may require preprocessing, cleaning, and transformation to ensure its suitability for training machine learning models. Additionally, machine learning data 642 is often divided into training, validation, and testing sets to assess the performance and generalization ability of trained models accurately.

Machine learning models 644 are algorithms or mathematical representations that learn patterns and relationships from the provided data to make predictions or decisions without being explicitly programmed. Machine learning models 644 models are trained using the machine learning data 642, where they iteratively adjust their internal parameters or coefficients to minimize prediction errors or maximize performance metrics. Machine learning models 644 can be classified into various types based on their learning algorithms and the nature of the problem they address, including supervised learning models (e.g., regression, classification), unsupervised learning models (e.g., clustering, dimensionality reduction), and reinforcement learning models. Once trained, machine learning models 644 can be deployed in production environments to make predictions on new, unseen data instances. Regular evaluation and monitoring of model performance are essential to ensure their accuracy, reliability, and effectiveness in real-world applications.

The security management client 650 supports access to security management system 660. Security management client 650 provides a graphical or command-line interface for users or administrators to interact with security management system 610, handling tasks such as planning, implementing, controlling, and monitoring security measures to protect assets, resources, and information from various threats and risks in computing environments. The security management client 650 supports centralized security management, security enforcement, and compliance within a computing environment (e.g., organization's infrastructure), empowering efficient security administration and safeguarding resources.

Secured computing environment 660 can refer to a computing environment that is secured using the security management system 610. For example, cloud computing environments provided by cloud providers encompass various types, including public, private, hybrid, and multi-cloud environments, as well as containerized environments. In a public cloud setup, resources are shared among multiple customers and accessed over the internet, with security managed by the provider through measures like network segmentation and encryption. Private clouds, dedicated to a single organization, offer greater control and are secured through strict access controls and encryption, either by the organization itself or a third-party provider. Hybrid clouds combine elements of public and private clouds, requiring integrated security measures across both environments, such as identity federation and consistent monitoring. Multi-cloud environments leverage services from multiple providers, necessitating standardized security policies and controls for consistent protection. Containerized environments, utilizing technologies like Docker and Kubernetes, secure applications through container image scanning, runtime monitoring, and access control. Across all types, the security management system 610 can provide security management, including compliance certifications, threat intelligence, and security consulting, to safeguard data, infrastructure, and applications from evolving cyber threats and ensure adherence to regulatory requirements.

## EXAMPLE DISTRIBUTED COMPUTING SYSTEM ENVIRONMENT

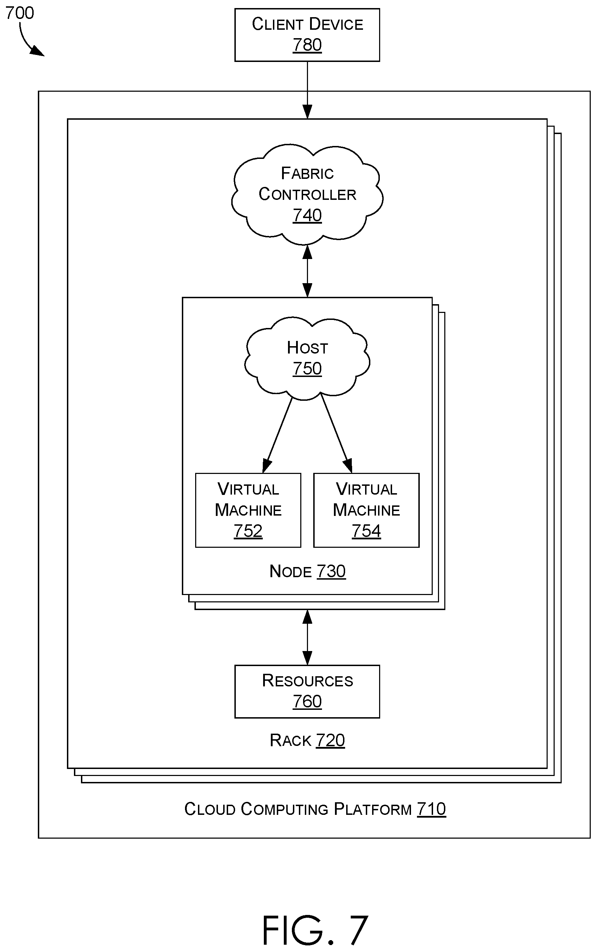

Referring now to FIG. 7, FIG. 7 illustrates an example distributed computing environment 700 in which implementations of the present disclosure may be employed. In particular, FIG. 7 shows a high level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing infrastructure 710 in a data center can be configured to host and support operation of endpoints of a particular service application. Cloud computing infrastructure 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 700 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

**EXAMPLE COMPUTING ENVIRONMENT**

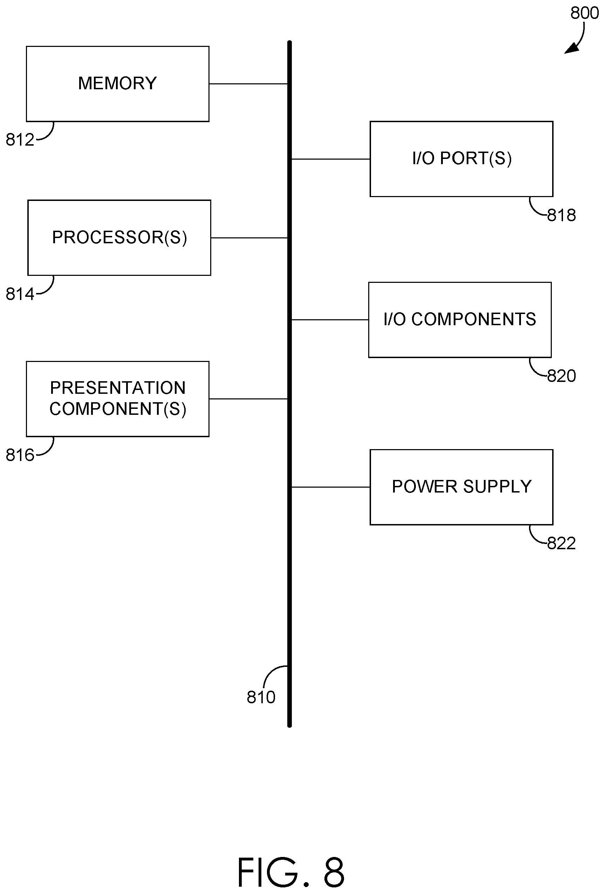

Having briefly described an overview of embodiments of the present technical solution, an example operating environment in which embodiments of the present technical solution may be implemented is described below in order to provide a general context for various aspects of the present technical solution. Referring initially to FIG. 8 in particular, an example operating environment for implementing embodiments of the present technical solution is shown and designated generally as computing device 800. Computing device 800 is but one example of a suitable computing environment and is not intended to suggest any limitation as to the scope of use or functionality of the technical solution. Neither should computing device 800 be interpreted as having any dependency or requirement relating to any one or combination of components illustrated.

The technical solution may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technical solution may be practiced in a variety of system configurations, including hand-held devices, consumer electronics, general-purpose computers, more specialty computing devices, etc. The technical solution may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 8 is merely illustrative of an example computing device that can be used in connection with one or more embodiments of the present technical solution. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

**EXAMPLE EMBODIMENTS**

Described herein are methods, systems, and computer storage media for providing security incident prioritization management using an adaptive incident prioritization engine of a security management system are described. The adaptive incident prioritization engine provides security incident prioritization based on an adaptive incident prioritization (AIP) framework built using a ranking algorithm. In particular, the adaptive incident prioritization framework employs a Best Matching 25 (BM25) algorithm and strategically and programmatically adapts the algorithm (e.g., an adaptive incident prioritization model) to rank security incidents based on a local security incident relevance metric (an adaptation of Term Frequency - TF - in BM25) and a global security incident rarity metric (an adaptation of Inverse Document Frequency - IDF - in BM25) associated with security incidents. A prioritization score for a security incident is calculated based on aggregating weighted frequencies of security incident ranking components (e.g., security incident metadata) within a security incident to determine an overall significance of the security incident.

Clause A. A computerized system comprising: one or more computer processors; and computer memory storing computer-useable instructions that, when used by the one or more computer processors, cause the one or more computer processors to perform operations, the operations comprising: accessing historical security data associated with a plurality security incidents of a computing environment; identifying in the historical security data a plurality of security incident components associated with the plurality security incidents; calculating global rarity metrics for the plurality of security incident components, wherein a global rarity metric is an adapted inverse document frequency that quantifies a rarity of a security incident component of the plurality of security incident components; training an adaptive incident prioritization model based on the global rarity metrics of the plurality of security incident components; and deploying the adaptive incident prioritization model.

Clause B. The system of Clause A, wherein a security incident component comprises security incident metadata that provides contextual information associated with a security incident, the security incident metadata includes an incident grade that identifies a severity of the security incident.

Clause C. The system of Clause A, wherein the adaptive incident prioritization model supports scoring security incidents based on corresponding local relevance metrics and global rarity metrics of the security incidents.

Clause D. The system of Clause A, wherein the adaptive incident prioritization model is operationalized with a training phase associated with a training pipeline and an inference phase associated with an inference pipeline.

Clause E. The system of Clause A, wherein the adaptive incident prioritization model supports generating security incident prioritization explanation data that provides a rationale associated with a plurality of security incident components and security incident prioritization score corresponding to a security incident.

Clause F. The system of Clause A, 1, the operations further comprising: accessing a security incident associated with a computing environment; accessing a plurality of security incident components of the security incident; calculating local relevance metrics for the plurality of security components, wherein a local relevance metric is an adapted term frequency that quantifies a frequency of a security incident component of the plurality of security incident components; accessing the global rarity metrics for the plurality of security incident components; scoring the security incident based on the local relevance metrics and the global rarity metrics; and ranking the security incident relative to a plurality of security incidents in the computing environment.

Clause G. The system of Clause F, the operations further comprising: accessing a security incident identifier associated with the security incident, a security incident prioritization score, and an adaptive incident prioritization explanation data, wherein the adaptive incident prioritization explanation data provides a rationale associated with a plurality security incident components for the security incident prioritization score; causing display of the security incident identifier relative to a plurality of security incident identifiers on a security incident prioritization interface based on the security incident prioritization score; and causing display of the adaptive incident prioritization explanation data associated with the security incident.

Clause H. The system of Clause A. the operations further comprising: communicating, from a security management client, a request for a security posture of a computing environment; based on communicating the request, receiving a security posture visualization comprising a security incident identifier associated with a security incident, a security incident prioritization score, and an adaptive incident prioritization explanation data and causing display of the security posture visualization.

Clause I. The system of Clause H. the operations further comprising: receiving an indication to execute a remediation action associated with the security incident identifier; and communicating the indication to execute the remediation action to cause execution of the remediation action.

Clause J. A computer-implemented method, the method comprising: accessing a security incident associated with a computing environment; accessing a plurality of security incident components of the security incident; calculating local relevance metrics for the plurality of security components, wherein a local relevance metric is an adapted term frequency that quantifies a frequency of a security incident component of the plurality of security incident components; accessing global rarity metrics for the plurality of security incident components, wherein a global rarity metric is an adapted inverse document frequency that quantifies a rarity of a security incident component of the plurality of security incident components; scoring the security incident based on the local relevance metrics and the global rarity metrics; and ranking the security incident relative to a plurality of security incidents in the computing environment.

Clause K. The method of Clause J, the operations further comprising: accessing customer feedback data, wherein the customer feedback data is received via a customer interface associated with a rating mechanism for rating rankings associated with security incidents; and using the customer feedback data, generating adjusted feature weights associated with an adaptive incident prioritization engine; based on the adjusted feature weights, generating an updated adaptive incident prioritization model; and deploying the updated adaptive prioritization model.

Clause L. The method of Clause J, wherein scoring the security is based on an adaptive incident prioritization model that supports scoring security incidents based on corresponding local relevance metrics and global rarity metrics of the security incidents.

Clause M. The method of Clause L, wherein the adaptive incident prioritization model is operationalized with a training phase associated with a training pipeline and an inference phase associated with an inference pipeline.

Clause N. The method of Clause L, wherein the adaptive incident prioritization model supports generating security incident prioritization explanation data that provides a rationale associated with a plurality of security incident components and security incident prioritization score corresponding to the security incident.

Clause O. The method of Clause J, the method further comprising: based on ranking the plurality of security incidents, communicating the plurality of security incidents to cause display of the plurality of security incidents.

Clause P. One or more computer-storage media having computer-executable instructions embodied thereon that, when executed by a computing system having a processor and memory, cause the processor to perform operations, the operations comprising: accessing a security incident identifier associated with a security incident, a security incident prioritization score, and an adaptive incident prioritization explanation data, wherein the adaptive incident prioritization explanation data provides a rationale associated with a plurality security incident components for the security incident prioritization score; causing display of the security incident identifier relative to a plurality of security incident identifiers on a security incident prioritization interface based on the security incident prioritization score; and causing display of the adaptive incident prioritization explanation data associated with the security incident.

Clause Q. The media of Clause P, wherein the security incident prioritization score is generated using an adaptive incident prioritization model that supports scoring security incidents based on corresponding local relevance metrics and global rarity metrics of the security incidents.

Clause R. The media of Clause Q, wherein the adaptive incident prioritization model is operationalized with a training phase associated with a training pipeline and an inference phase associated with an inference pipeline.

Clause S. The media of Clause P, the operations further comprising: communicating a request for a security posture of a computing environment; based on communicating the request, receiving a security posture visualization comprising the security incident identifier associated with the security incident, the security incident prioritization score, and the adaptive incident prioritization explanation data; and causing display of the security posture visualization.

Clause T. The media of Clause S, the operations further comprising: receiving an indication to execute a remediation action associated with the security incident identifier; and communicating the indication to execute the remediation action to cause execution of the remediation action.

## ADDITIONAL STRUCTURAL AND FUNCTIONAL FEATURES OF EMBODIMENTS OF THE TECHNICAL SOLUTION

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technical solution is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technical solution are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present technical solution may generally refer to the technical solution environment and the schematics described herein, it is understood that the techniques described may be extended to other implementation contexts.

For purposes of this disclosure the word "support" refers to provisioning of functionality, services, or assistance by a computing component or through computing operations within a broader computing system. When a computing component or set of operations supports a specific functionality, it means that it plays a role in enabling or executing that particular aspect of the computing system. This support can manifest in various ways, including the processing of data, execution of operations, management of resources, and ensuring compatibility or interoperability with other components. Additionally, support may involve providing interfaces, APIs (Application Programming Interfaces), or protocols that allow seamless interaction and integration with other elements of the computing system. The concept of support extends beyond mere functionality provision to encompass maintenance, troubleshooting, and the overall optimization of computing resources to ensure the robust and efficient operation of the computing system.

Embodiments of the present technical solution have been described in relation to particular embodiments which are intended in all respects to be illustrative rather than restrictive. Alternative embodiments will become apparent to those of ordinary skill in the art to which the present technical solution pertains without departing from its scope.

From the foregoing, it will be seen that this technical solution is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

## Claims

1. A computerized system comprising:

    one or more computer processors; and
    computer memory storing computer-useable instructions that, when used by the one or more computer processors, cause the one or more computer processors to perform operations, the operations comprising:

    accessing (302) historical security data associated with a plurality security incidents of a computing environment;
    identifying (304) in the historical security data a plurality of security incident components associated with the plurality security incidents;
    calculating (306) global rarity metrics for the plurality of security incident components, wherein a global rarity metric is an adapted inverse document frequency that quantifies a rarity of a security incident component of the plurality of security incident components;
    training (308) an adaptive incident prioritization model based on the global rarity metrics of the plurality of security incident components; and
    deploying (310) the adaptive incident prioritization model.

2. The system of claim 1, wherein a security incident component comprises security incident metadata that provides contextual information associated with a security incident, the security incident metadata includes an incident grade that identifies a severity of the security incident.

3. The system of claim 1, wherein the adaptive incident prioritization model supports scoring security incidents based on corresponding local relevance metrics and global rarity metrics of the security incidents.

4. The system of claim 1, wherein the adaptive incident prioritization model is operationalized with a training phase associated with a training pipeline and an inference phase associated with an inference pipeline.

5. The system of claim 1, wherein the adaptive incident prioritization model supports generating security incident prioritization explanation data that provides a rationale associated with a plurality of security incident components and security incident prioritization score corresponding to a security incident.

6. The system of claim 1, the operations further comprising:

    accessing a security incident associated with a computing environment;
    accessing a plurality of security incident components of the security incident;
    calculating local relevance metrics for the plurality of security components, wherein a local relevance metric is an adapted term frequency that quantifies a frequency of a security incident component of the plurality of security incident components;
    accessing the global rarity metrics for the plurality of security incident components;
    scoring the security incident based on the local relevance metrics and the global rarity metrics; and
    ranking the security incident relative to a plurality of security incidents in the computing environment.

7. The system of claim 6, the operations further comprising:

    accessing a security incident identifier associated with the security incident, a security incident prioritization score, and an adaptive incident prioritization explanation data, wherein the adaptive incident prioritization explanation data provides a rationale associated with a plurality security incident components for the security incident prioritization score;
    causing display of the security incident identifier relative to a plurality of security incident identifiers on a security incident prioritization interface based on the security incident prioritization score; and
    causing display of the adaptive incident prioritization explanation data associated with the security incident.

**8.** The system of claim **1,** the operations further comprising:

> communicating, from a security management client, a request for a security posture of a computing environment;
> based on communicating the request, receiving a security posture visualization comprising a security incident identifier associated with a security incident, a security incident prioritization score, and an adaptive incident prioritization explanation data and
> causing display of the security posture visualization.

**9.** The system of claim 8, the operations further comprising:

> receiving an indication to execute a remediation action associated with the security incident identifier; and
> communicating the indication to execute the remediation action to cause execution of the remediation action.

**10.** A computer-implemented method, the method comprising:

> accessing (402) a security incident associated with a computing environment;
> accessing (404) a plurality of security incident components of the security incident;
> calculating (406) local relevance metrics for the plurality of security components, wherein a local relevance metric is an adapted term frequency that quantifies a frequency of a security incident component of the plurality of security incident components;
> accessing (408) global rarity metrics for the plurality of security incident components, wherein a global rarity metric is an adapted inverse document frequency that quantifies a rarity of a security incident component of the plurality of security incident components;
> scoring (410) the security incident based on the local relevance metrics and the global rarity metrics; and
> ranking (412) the security incident relative to a plurality of security incidents in the computing environment.

**11.** The method of claim 10, the operations further comprising:

> accessing customer feedback data, wherein the customer feedback data is received via a customer interface associated with a rating mechanism for rating rankings associated with security incidents; and
using the customer feedback data, generating adjusted feature weights associated with an adaptive incident prioritization engine;
based on the adjusted feature weights, generating an updated adaptive incident prioritization model; and
deploying the updated adaptive prioritization model.

**12.** The method of claim 10, wherein scoring the security is based on an adaptive incident prioritization model that supports scoring security incidents based on corresponding local relevance metrics and global rarity metrics of the security incidents.

**13.** The method of claim 12, wherein the adaptive incident prioritization model is operationalized with a training phase associated with a training pipeline and an inference phase associated with an inference pipeline.

**14.** The method of claim 12, wherein the adaptive incident prioritization model supports generating security incident prioritization explanation data that provides a rationale associated with a plurality of security incident components and security incident prioritization score corresponding to the security incident.

**15.** The method of claim 10, the method further comprising:
based on ranking the plurality of security incidents, communicating the plurality of security incidents to cause display of the plurality of security incidents.

SECURITY MANAGEMENT SYSTEM
100A

SECURITY MANAGEMENT
CLIENT
100B

ADAPTIVE INCIDENT PRIORITIZATION
ENGINE
110

100

ADAPTIVE INCIDENT PRIORITIZATION
MODEL
112

SECURITY INCIDENT COMPONENTS
114

ADAPTED BEST MATCHING 25 RANKER
116

SECURED COMPUTING
ENVIRONMENT
100X

ADAPTIVE INCIDENT PRIORITIZATION
RESOURCES
120

SECURED COMPUTING
ENVIRONMENT
100Y

ADAPTIVE INCIDENT PRIORITIZATION
DEPLOYMENT X
130

ADAPTIVE INCIDENT PRIORITIZATION
DEPLOYMENT Y
140

SECURED COMPUTING
ENVIRONMENT
100Z

ADAPTIVE INCIDENT PRIORITIZATION
DEPLOYMENT Z
150

FIG. 1A

TRAIN PIPELINE (EVERY WEEK)

114B~ INCIDENT
METADATA

110B~

112B    118B

HISTORICAL    EXTRACT    120B    122B
INCIDENTS    FEATURES    TRAIN AIP    SAVE
MODEL    MODEL

116B~ INCIDENT
GRADES

INFERENCE PIPELINE (EVERY 15 MIN)

124B~ INCIDENT    130B~ CUSTOM
METADATA    WEIGHTINGS

122B    126B    132B    134B

120B~    NEW    EXTRACT    AIP    OUTPUT
INCIDENTS    FEATURES    MODEL    RANKINGS

128B~ LOAD
MODEL

FIG. 1B

# Incidents

Most recent incidents and alerts

⤓ Export

Filter set: 🖫 Save

( ⫶ Add filter )

| ☐ | ☰ | Incident name ⌄ | Incident Id ⌄ | Tags ⌄ | Severity ⌄ |
|---|---|---|---|---|---|
| ☐ | › | A WMI event filter was bound to a suspicious event consumer on one endpoint | 13448 | | ■■□ Medium |
| ☐ | › | Multi-stage incident involving Execution & Discovery on one endpoint | 13445 | | ■■■ High |
| ☐ | › | Mimikatz credential theft tool was detected (Agentless) on one endpoint | 13443 | | ■■■ High |
| ☐ | › | Suspicious activity incident on one endpoint | 13441 | | ■■■ High |
| ☐ | › | 'VirusName' hacktool was detected (Agentless) on one endpoint | 13442 | | ■■■ High |
| ☐ | › | 'VirusName' malware was detected (Agentless) on one endpoint | 13439 | | ■■■ High |
| ☐ | › | Suspicious activity incident on multiple endpoints | 13435 | | ■■■ High |
| ☐ | › | Multi-stage incident involving initial access & Execution on one endpoint | 13422 | | ■■■ High |
| ☐ | › | Command and control incident on one endpoint | 13348 | | ■■■ High |
| ☐ | › | test SAP users logon (2024627 115559) | 13395 | | ■■□ Medium |
| ☐ | › | test SAP users logon (2024627 115559) | 13392 | | ■■□ Medium |
| ☐ | › | test SAP users logon | 13393 | | ■■□ Medium |

FIG. 1C

## Incidents

Most recent incidents and alerts

⤓ Export

Filter set: 🖫 Save

( ⛛ Add filter )

| ☐ ≡ Incident name ⌄ | | Incident Id ⌄ | Tags ⌄ | Score ⌄ |
|---|---|---|---|---|
| ☐ > Hands-on keyboard attack was launched from a compromised account (attack disr... | | 12839 | Attack Disruption | 6.12 |
| ☐ > Cyberattack activity detection | | 10968 | Ransomware +3 | 5.78 |
| ☐ > Human-operated ransomware attack was launched from a compromised asset (att... | | 9292 | Ransomware +2 | 5.43 |
| ☐ > SAP financial process manipulation (attack disruption) | | 12727 | Attack Disruption +1 | 5.43 |
| ☐ > SAP financial process manipulation (attack disruption) | ● | 12726 | Chain Event Detection | 4.79 |
| ☐ > SAP financial process manipulation (attack disruption) | | 12725 | Chain Event Detection | 4.64 |
| ☐ > SAP financial process manipulation (attack disruption) | | 12724 | Chain Event Detection | 3.12 |
| ☐ > SAP financial process manipulation (attack disruption) | | 12723 | Attack Disruption +1 | 3.02 |
| ☐ > SAP financial process manipulation (attack disruption) | | 12720 | Chain Event Detection | 2.78 |
| ☐ > SAP financial process manipulation (attack disruption) | | 12718 | Attack Disruption +1 | 2.12 |
| ☐ > SAP financial process manipulation (attack disruption) | | 12719 | Chain Event Detection | 2.11 |
| ☐ > SAP financial process manipulation (attack disruption) | | 12511 | Attack Disruption +1 | 1.97 |

100C

106C  108C  110C

FIG. 1D

EP 4 704 384 A1

EP 4 704 384 A1

SECURITY MANAGEMENT SYSTEM
100A

ADAPTIVE INCIDENT PRIORITIZATION ENGINE
110

ADAPTIVE INCIDENT
PRIORITIZATION MODEL
112

SECURITY INCIDENT COMPONENTS
114

ADAPTED BEST MATCHING 25
RANKER
116

ADAPTIVE FEEDBACK LOOP ENGINE
118

ADAPTIVE INCIDENT PRIORITIZATION
DEPLOYMENT X
130

TRAINING PIPELINE
132

INFERENCE PIPELINE
134

SECURITY POSTURE MANAGEMENT
ENGINE
160

SECURITY MANAGEMENT
CLIENT
130

SECURED COMPUTING
ENVIRONMENT
100X

100

FIG. 2A

FIG. 2B

302 — ACCESS HISTORICAL SECURITY DATA ASSOCIATED WITH A COMPUTING ENVIRONMENT

304 — IDENTIFY A PLURALITY OF SECURITY INCIDENT COMPONENTS ASSOCIATED WITH A PLURALITY OF SECURITY INCIDENTS IN THE HISTORICAL SECURITY DATA

306 — CALCULATE GLOBAL RARITY METRICS FOR THE PLURALITY OF SECURITY INCIDENT COMPONENTS

308 — TRAIN AN ADAPTIVE INCIDENT PRIORITIZATION MODEL BASED ON THE GLOBAL RARITY METRICS OF THE PLURALITY OF SECURITY INCIDENT COMPONENTS

308 — DEPLOY THE ADAPTIVE INCIDENT PRIORITIZATION MODEL

# FIG. 3

400

```
┌─────────────────────────────────────┐
402─│  ACCESS A SECURITY INCIDENT ASSOCIATED │
    │     WITH A COMPUTING ENVIRONMENT      │
    └─────────────────────────────────────┘
                     │
                     ▼
    ┌─────────────────────────────────────┐
    │  IDENTIFY A PLURALITY OF SECURITY INCIDENT │
404─│  COMPONENTS ASSOCIATED WITH THE SECURITY  │
    │               INCIDENT                │
    └─────────────────────────────────────┘
                     │
                     ▼
    ┌─────────────────────────────────────┐
    │   CALCULATE LOCAL RELEVANCE METRICS FOR  │
406─│     THE PLURALITY OF SECURITY INCIDENT    │
    │               COMPONENTS              │
    └─────────────────────────────────────┘
                     │
                     ▼
    ┌─────────────────────────────────────┐
    │  ACCESS THE GLOBAL RARITY METRICS FOR THE │
408─│      PLURALITY OF SECURITY INCIDENT       │
    │               COMPONENTS              │
    └─────────────────────────────────────┘
                     │
                     ▼
    ┌─────────────────────────────────────┐
    │   SCORE THE SECURITY INCIDENT BASED ON THE │
410─│   LOCAL RELEVANCE METRICS AND THE GLOBAL  │
    │             RARITY METRICS            │
    └─────────────────────────────────────┘
                     │
                     ▼
    ┌─────────────────────────────────────┐
    │  RANK THE SECURITY INCIDENT RELATIVE TO A │
412─│    PLURALITY OF SECURITY INCIDENTS IN THE  │
    │          COMPUTING ENVIRONMENT        │
    └─────────────────────────────────────┘
```

# FIG. 4

500

502 — ACCESS A SECURITY INCIDENT IDENTIFIER ASSOCIATED WITH A SECURITY INCIDENT, A SECURITY INCIDENT PRIORITIZATION SCORE, AND ADAPTIVE INCIDENT PRIORITIZATION EXPLANATION DATA

504 — CAUSE DISPLAY OF THE SECURITY INCIDENT IDENTIFIER RELATIVE TO A PLURALITY OF SECURITY INCIDENTS IDENTIFIERS ON A SECURITY INCIDENT PRIORITIZATION INTERFACE BASED ON THE SECURITY INCIDENT PRIORITIZATION SCORE

506 — CAUSE DISPLAY OF THE ADAPTIVE INCIDENT PRIORITIZATION EXPLANATION DATA ASSOCIATED WITH THE SECURITY INCIDENT

FIG. 5

600

**SECURITY MANAGEMENT SYSTEM**
**610**

**SECURITY MANAGEMENT ENGINE**
**620**

**SECURITY MANAGEMENT RESOURCES**
**630**

**MACHINE LEARNING ENGINE**
**640**

**MACHINE LEARNING DATA**
**642**

**MACHINE LEARNING MODELS**
**644**

**NETWORK**
**600A**

**SECURITY MANAGEMENT CLIENT**
**650**

**SECURED COMPUTING ENVIRONMENT**
**660**

FIG. 6

FIG. 7

FIG. 8

**Europäisches Patentamt**
**European Patent Office**
**Office européen des brevets**

# EUROPEAN SEARCH REPORT

**Application Number**

EP 25 19 6964

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 587 642 B1 (HERMAN-SAFFAR OR [IL] ET AL) 10 March 2020 (2020-03-10)<br>* column 4, lines 35-41 *<br>* column 5, line 27; figure 4 *<br>* column 8, line 25 *<br>* column 5, line 57 - column 6, line 9 *<br>* column 4, lines 44-47 *<br>----- | 1-15 | INV.<br>H04L9/40<br>G06F21/55<br>G06F40/30 |
| X | DING SHUAI ET AL: "Trace Anomaly Detection for Microservice Systems via Graph-based Semi-supervised Learning", 2024 27TH INTERNATIONAL CONFERENCE ON COMPUTER SUPPORTED COOPERATIVE WORK IN DESIGN (CSCWD), IEEE, 8 May 2024 (2024-05-08), pages 2375-2380, XP034636016, DOI: 10.1109/CSCWD61410.2024.10580078 [retrieved on 2024-07-10]<br>* section III *<br>----- | 1-10, 12-15 | |
| A | US 10 721 266 B1 (HERMAN-SAFFAR OR [IL] ET AL) 21 July 2020 (2020-07-21)<br>* column 3, lines 3-19 *<br>* column 5, lines 31-43 *<br>* column 6, line 58 - column 7, line 2 *<br>----- | 1-15 | **TECHNICAL FIELDS SEARCHED (IPC)**<br><br>G06F<br>H04L |

The present search report has been drawn up for all claims

| Place of search | Date of completion of the search | Examiner |
|---|---|---|
| Munich | 2 December 2025 | Rey, Salvador |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 6964

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2025

| Patent document cited in search report | Publication date | Patent family member(s) | Publication date |
|---|---|---|---|
| US 10587642 B1 | 10-03-2020 | NONE | |
| US 10721266 B1 | 21-07-2020 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 45140523